(19) Europäisches Patentamt
European Patent Office
Office européen des brevets

(11) **EP 3 211 384 B1**

(12) **EUROPÄISCHE PATENTSCHRIFT**

(45) Veröffentlichungstag und Bekanntmachung des Hinweises auf die Patenterteilung:
**18.08.2021   Patentblatt 2021/33**

(51) Int Cl.:
*G01F 1/58* (2006.01)       *G01F 1/60* (2006.01)

(21) Anmeldenummer: **17153059.5**

(22) Anmeldetag: **25.01.2017**

(54) **MAGNETISCH-INDUKTIVES DURCHFLUSSMESSGERÄT UND VERFAHREN DAFÜR**

MAGNETIC-INDUCTIVE FLOW METER AND ASSOCIATED METHOD

DÉBITMÈTRE INDUCTIF-MAGNÉTIQUE ET PROCÉDÉ ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.02.2016   DE 102016103504
31.05.2016   DE 102016110059**

(43) Veröffentlichungstag der Anmeldung:
**30.08.2017   Patentblatt 2017/35**

(73) Patentinhaber: **Krohne Messtechnik GmbH
47058 Duisburg (DE)**

(72) Erfinder:
• **Abrolat, Jan
44892 Bochum (DE)**
• **MUSCH, Thomas
44879 Bochum (DE)**

(74) Vertreter: **Gesthuysen Patentanwälte
Patentanwälte
Huyssenallee 100
45128 Essen (DE)**

(56) Entgegenhaltungen:
EP-A2- 0 233 084          WO-A1-92/13256
DE-A1- 1 911 556          DE-A1- 2 807 356
DE-A1-102011 083 548      DE-A1-102014 212 802
GB-A- 990 484             JP-A- 2006 118 938
US-A- 3 490 282           US-A- 4 162 630
US-A1- 2004 060 366       US-A1- 2011 056 307
US-A1- 2014 083 199       US-A1- 2015 007 641

• A J Peyton ET AL: "Measurement Science and Technology An overview of electromagnetic inductance tomography: description of three different systems", Meas. Sci. Technol, 1. Januar 1996 (1996-01-01), Seiten 261-271, XP055421311, Gefunden im Internet: URL:http://iopscience.iop.org/article/10.1088/0957-0233/7/3/006/pdf [gefunden am 2017-11-02]

EP 3 211 384 B1

**Beschreibung**

Die vorliegende Erfindung betrifft ein magnetisch-induktives Durchflussmessgerät (MID) mit einem Messrohr und zumindest einer Messelektrode, wobei das Messrohr einen Einlaufabschnitt und einen Auslaufabschnitt, die in Axialrichtung des Messrohrs voneinander beabstandet sind, umfasst. Das Messrohr weist an seiner Umfangswandung zumindest eine Einführöffnung auf, in der die zumindest eine Messelektrode mit ihrem Elektrodenkopf angeordnet ist. Über eine Spulenanordnung wird ein Magnetfeld erzeugt, welches das Innere des Messrohrs durchsetzt. Weiterhin betrifft die Erfindung ein Verfahren für ein solches magnetisch-induktives Durchflussmessgerät.

Das Messprinzip magnetisch-induktiver Durchflussmessgeräte beruht auf der Trennung bewegter Ladungen in einem Magnetfeld. Die messtechnische Grundlage bildet ein Messrohr aus einem nicht magnetischen Werkstoff, beispielsweise aus einem nicht magnetischen Metall oder einem Kunststoff, das auf der Strömungsseite durch eine isolierende Auskleidung elektrisch von dem Messfluid isoliert ist und das von einem durch die Magneteinrichtung - beispielsweise durch Spulen - erzeugten Magnetfeld senkrecht zur Strömungsrichtung durchsetzt ist. Wird nun das Messrohr von einem Messfluid mit einer elektrischen Mindestleitfähigkeit durchflossen, werden die in dem leitfähigen Messfluid vorhandenen Ladungsträger, Ionen oder geladene Teilchen, durch das Magnetfeld abgelenkt. An senkrecht zum Magnetfeld und zur Strömungsrichtung angeordneten Messelektroden entsteht durch die Ladungstrennung eine Spannung, die mit einem Messgerät erfasst wird und als Messspannung ausgewertet wird. Der Wert der gemessenen Spannung ist dabei proportional zur Strömungsgeschwindigkeit der mit dem Messfluid bewegten Ladungsträger.

Durch den Einsatz mehrerer Messelektroden kann auch ein Volumenstrom ermittelt werden. Eine solche Messvorrichtung ist aus der Veröffentlichung "Electromagnetic Flowmeter with Multiple Poles and Electrodes von Taiichi Teshima et al. von der Proceeding of Instrumentation and Measurement Technology Converence (IMTC/94, 3, 10 bis 12 Mai 1994, pp1221-1224) in Hamametsu, Japan, bekannt. Diese Vorrichtung umfasst mehrere Spulen und Messelektroden, die in einer Ebene senkrecht zum Messrohr angeordnet sind.

Nachteilig an der bekannten Messvorrichtung ist, dass diese lediglich eine ungenaue Messung der Durchflussgeschwindigkeit, insbesondere bei nicht roationssymmetrischen Geschwindigkeitsverteilungen erlaubt.

Die US 2011/056307 A1 beschreibt ein weiteres magnetisch-induktives Durchflussmessgerät mit einem einzelnen Spulenpaar.

Die WO 92/13256 A1 beschreibt ein magnetisch-induktives Durchflussmessgerät mit zwei Spulenpaaren.

Ausgehend von dem zuvor beschriebenen Stand der Technik liegt der vorliegenden Erfindung die Aufgabe zugrunde, ein magnetisch-induktives Durchflussmessgerät und ein Verfahren hierfür anzugeben, die gegenüber den Messgeräten aus dem Stand der Technik eine genauere Messung der Durchflussgeschwindigkeit erlauben.

Die vorgenannte Aufgabe ist bei dem eingangs beschriebenen magnetisch-induktiven Durchflussmessgerät gemäß der vorliegenden Erfindung gemäß dem Anspruch 1 gelöst.

Besonders vorteilhaft ist hierbei, dass jedes Spulenpaar bestehend aus zwei Spulen axial versetzt zueinander angeordnet ist und dass die zumindest eine Messelektrode an dem Umfangsbereich der Umfangswandung des Messrohrs angeordnet sich, der sich zwischen dem Spulenpaar befindet. Durch zwei axial voneinander beabstandete Spulen kann ein (Summen-) Magnetfeld erzeugt werden, welches beispielsweise in einer Ebene, die durch die Mitte beider Spulen senkrecht zum Querschnitt des Messrohrs verläuft, überwiegend oder lediglich eine Komponente aufweist, die senkrecht zur Strömungsrichtung des Messfluids zeigt. Komponenten der (Einzel)- Magnetfelder, die in Strömungsrichtung des Messfluids zeigen, werden durch das jeweilige (Einzel-) Magnetfeld der anderen Spule teilweise oder vollständig kompensiert, bzw. aufgehoben. Und genau in diesem Umfangsbereich ist die zumindest eine Messelektrode angeordnet. Die Messergebnisse dieser Messelektrode sind aufgrund der verbesserten Ausrichtung des Magnetfelds, die vorzugsweise überwiegend senkrecht zur Strömungsrichtung des Messfluids ausgebildet ist, genauer als die Messergebnisse der aus dem Stand der Technik bekannten Messvorrichtung. Besonders gute Messergebnisse werden dabei erzeugt, wenn die erste und die zweite Spule jedes Spulenpaars einzig in Axialrichtung des Messrohrs und nicht in Umfangsrichtung des Messrohrs versetzt zueinander angeordnet sind. Vorzugsweise überlappen sich die erste und die zweite Spule dabei in Draufsicht auf einen Querschnitt durch das Messrohr vollständig. Weiter vorzugsweise sind die erste und die zweite Spule dabei in Draufsicht auf den Querschnitt durch das Messrohr vollständig deckungsgleich zueinander angeordnet.

Zur einfachen Orientierung ist mit "Einlaufabschnitt" der stromaufwärts gelegene Bereich und mit "Auslaufabschnitt" der stromabwärts gelegene Bereich des Messrohrs bezeichnet. Der Querschnitt des Einlaufabschnitts entspricht dem Querschnitt des Auslaufabschnitts. Wenn hier von einem Querschnitt die Rede ist, also beispielsweise dem Anschlussquerschnitt, dann ist damit stets derjenige Querschnitt bzw. die Fläche eines Schnitts durch das Messrohr senkrecht zur Strömungsrichtung des Messfluids gemeint. Und einer "Axialrichtung des Messrohrs" ist auch die "Längsrichtung des Messrohrs" zu verstehen. Die Strömungsrichtung des Messfluids verläuft ebenfalls entlang der Axialrichtung des Messrohrs.

Gemäß einer bevorzugten Ausgestaltung der Erfindung ist vorgesehen, dass die erste und die zweite Spule jedes Spulenpaars radial zur Axialrichtung des Messrohrs und senkrecht zu einer Durchflussrichtung an der Umfangswandung des Messrohrs angeordnet sind. Ergänzend oder alternativ dazu kann dies auch für die zumindest eine Messelektrode gelten. Diese kann ebenfalls radial zur Axialrichtung des Messrohrs und damit senkrecht zu einer Durchflussrichtung an bzw. mit ihrem Elektrodenkopf in der Umfangswandlung des Messrohrs angeordnet sein. Durch die erfindungsgemäße Anordnung der Spulen kann ein besonders homogenes Magnetfeld erzeugt werden. Die Messelektrode kann durch die erfindungsgemäße Anordnung derart positioniert werden, dass der Elektrodenkopf bzw. die Längsachse durch die Messelektrode senkrecht zum Magnetfeld und damit senkrecht zur Durchflussrichtung des Messfluids angeordnet ist. Dadurch kann eine besonders genaue Messung der Durchflussgeschwindigkeit erfolgen.

In einer bevorzugten Ausführungsform der vorliegenden Erfindung ist vorgesehen, dass die zumindest eine Messelektrode gleich weit von der ersten Spule jedes Spulenpaars entfernt ist wie von der zweiten Spule jedes Spulenpaars. Dadurch wird erreicht, dass die zumindest eine Messelektrode in Axialrichtung des Messrohrs an der Stelle am Messrohr angeordnet ist, an welcher das durch die beiden Spulen jedes Spulenpaars erzeugte Magnetfeld lediglich eine Komponente senkrecht zur Durchflussrichtung aufweist.

Je nach Anzahl der verwendeten Spulenpaare kann es vorteilhaft sein, wenn die zumindest eine Messelektrode in Draufsicht auf einen Querschnitt durch das Messrohr überlappend zu der ersten und zweiten Spule jedes Spulenpaars angeordnet ist oder in Umfangsrichtung versetzt zu der ersten und zweiten Spule jedes Spulenpaars angeordnet ist. Unter dem Wortlaut "überlappend" ist zu verstehen, dass die zumindest eine Messelektrode von der ersten und zweiten Spule jedes Spulenpaars in Axialrichtung des Messrohrs versetzt angeordnet ist, wobei eine gedachte Gerade, die parallel zur Axialrichtung des Messrohrs durch die erste und zweite Spule verläuft auch durch die Messelektrode verläuft. Unter dem Wortlaut "vollständig überlappend" ist zu verstehen, dass die gedachte Gerade, die parallel zur Axialrichtung des Messrohrs verläuft jeweils senkrecht durch die Längsachsen der beiden Spulen und optional durch die Längsachse der Messelektrode verläuft. Unter dem Wortlaut "deckungsgleich" ist zu verstehen, dass die einzelnen Spulen die gleichen räumlichen Größen aufweisen und keine Spule hinter oder vor einer anderen hervorsteht.

Für den Fall, dass eine gerade Anzahl von Spulenpaaren am Messrohr angeordnet sind, kann auf diese Art und Weise (Messelektrode ist überlappend zu den Spulen angeordnet) erreicht werden, dass die zumindest eine Messelektrode senkrecht zum Magnetfeld des weiteren Spulenpaars angeordnet ist. Vorzugsweise ist die Messelektrode allerdings in Umfangsrichtung versetzt zu der ersten und zweiten Spule jedes Spulenpaars angeordnet. Die Messelektrode muss dabei nicht exakt senkrecht zu dem Magnetfeld jedes Spulenpaars angeordnet sein. Es ist auch ausreichend, wenn eine gedachte Gerade durch die Längsachse der zumindest einen Messelektrode eine Komponente aufweist, die einen Anteil besitzt, der senkrecht zum Magnetfeld verläuft. Vorzugsweise verläuft die Gerade überwiegend senkrecht zum Magnetfeld verläuft (mehr als 45°).

Um sicherzustellen, dass in einer Ebene, die senkrecht zur Axialrichtung des Messrohrs verläuft und die zwischen der ersten und zweiten Spule jedes Spulenpaars angeordnet ist, lediglich ein Magnetfeld vorhanden ist, das überwiegend oder ausschließlich senkrecht zur Durchflussrichtung ausgerichtet ist, werden die erste und die zweite Spule jedes Spulenpaars von einem Strom durchflossen, der in Höhe und Richtung identisch ist. Dies wird dadurch erreicht, dass die erste und die zweite Spule elektrisch in Reihe geschalten sind. Dies gilt vorzugsweise für alle Spulenpaare des magnetisch-induktiven Durchflussmessgeräts.

Dieser Effekt wird dadurch noch verstärkt, dass alle Spulen oder nur jeweils die erste und die zweite Spule jedes Spulenpaars bezüglich ihrer Eigenschaften, wie Geometrie und/oder Wicklungsanzahl und/oder Wicklungsquerschnitt und/oder Herstellungsmaterial identisch zueinander aufgebaut sind.

Um auch nicht rotationssymmetrische Geschwindigkeitsverteilungen messen zu können, umfasst der magnetisch-induktive Durchflussmesser in einer weiteren Ausgestaltung der vorliegenden Erfindung n Spulenpaare mit $n \geq 3$, vorzugsweise $n \geq 4$, weiter vorzugsweise $n \geq 6$, weiter vorzugsweise $n \geq 8$, weiter vorzugsweise $n \geq 10$ und weiter vorzugsweise $n \geq 12$. Jedes dieser n Spulenpaare weist eine erste und eine zweite Spule auf, die lediglich in Axialrichtung des Messrohrs voneinander beabstandet an der Umfangswandung des Messrohrs angeordnet sind. Ergänzend oder alternativ dazu umfasst das magnetisch-induktive Durchflussmessgerät zumindest m Messelektroden mit $m \geq 2$, vorzugsweise $m \geq 3$, weiter vorzugsweise $m \geq 4$, weiter vorzugsweise $m \geq 6$, weiter vorzugsweise $m \geq 8$, weiter vorzugsweise $m \geq 10$ und weiter vorzugsweise $m \geq 12$, die in einem Umfangsbereich an der Umfangswandung des Messrohrs angeordnet sind, wobei der Umfangsbereich zwischen den ersten und zweiten Spulen der Spulenpaare ausgebildet ist.

Die ersten Spulen der zumindest n Spulenpaare sind dabei in einer ersten Spulenebene angeordnet, die senkrecht durch das Messrohr verläuft. Die zweiten Spulen der zumindest n Spulenpaare sind in einer zweiten Spulenebene angeordnet, die ebenfalls senkrecht durch das Messrohr verläuft. Gleiches gilt auch für die zumindest m Messelektroden. Diese sind in einer Messebene angeordnet, die senkrecht durch das Messrohr verläuft. Die erste Spulenebene, die zweite Spulenebene und die Messebene sind in Axialrichtung voneinander beabstandet parallel zueinander angeordnet. Dadurch wird ein besonders symmetrischer Aufbau erreicht, was sich positiv auf die Messgenauigkeit des magnetisch-induktiven Durchflussmessgeräts auswirkt.

Diese Messgenauigkeit wird weiter dadurch erhöht, dass die Messebene, in der die m Messelektroden angeordnet sind, gleich weit von der ersten Spulenebene und der zweiten Spulenebene beabstandet ist.

Der Abstand der einzelnen ersten Spulen der n Spulenpaare und der zweiten Spulen der n Spulenpaare untereinander in Umfangsrichtung des Messrohrs ist vorzugsweise gleich. Dies bedeutet, dass die ersten und zweiten Spulen der zumindest n Spulenpaare jeweils um $\alpha$ = 360°/n beabstandet zueinander an der Umfangswandung des Messrohrs angeordnet sind. Ergänzend oder alternativ kann dies auch für die zumindest m Messelektroden gelten, die vorzugsweise ebenfalls um $\alpha$ = 360°/m beabstandet zueinander an der Umfangswandung des Messrohrs angeordnet sind. Vorzugsweise gibt es so viele Spulenpaare wie Messelektroden. Es kann natürlich auch weniger Spulenpaare als Messelektroden oder weniger Messelektroden als Spulenpaare geben. Vorzugsweise beträgt der Unterschied zwischen den Spulenpaaren und den Messelektroden allerdings immer ein ganzzahliges Vielfaches. Für den Fall, dass es zwei Spulenpaare gibt, sollte das magnetisch-induktive Durchflussmessgerät zwei, vier, sechs oder acht usw. Messelektroden umfassen.

Um die Streuflüsse zu reduzieren, weist das zumindest eine, insbesondere jedes der n Spulenpaare, einen Spulenkern auf, der aus einem magnetischleitfähigen Medium, wie beispielsweise Eisen, besteht. Um einen solchen Spulenkern sind die Wicklungen der Spule gewickelt. Um den magnetischen Fluss optimal zu führen und um eine erhöhte Stabilität der gesamten Anordnung erreichen zu können, sind die Spulenkerne aller ersten Spulen der zumindest n Spulenpaare an ihrem ersten Ende über ein Joch miteinander verbunden. Gleiches gilt vorzugsweise auch für die Spulenkerne aller zweiten Spulen der zumindest n Spulenpaare. Diese sind an ihrem ersten Ende über ein zweites Joch miteinander verbunden. Bei dieser Verbindung handelt es sich vorzugsweise um eine Schraubverbindung.

Zur Steuerung der gesamten Anordnung umfasst das magnetisch-induktive Durchflussmessgerät eine Signalerzeugungseinrichtung, eine Messeinrichtung und eine Steuereinheit. Jede der zumindest einen Messelektrode ist zumindest mittelbar mit dem Eingang der Messeinrichtung verbunden. Weiterhin ist jedes der zumindest n Spulenpaare zumindest mittelbar mit einem Ausgang der Signalerzeugungseinrichtung verbunden. Die Steuereinheit ist dabei dazu ausgebildet, die Signalerzeugungseinrichtung und die Messeinrichtung derart anzusteuern, dass die Messeinrichtung eine Messspannung von der zumindest einen Messelektrode erfasst, die senkrecht oder mit einer Komponente senkrecht zum Magnetfeld angeordnet ist. Um ein möglichst homogenes Magnetfeld zu erhalten, ist die Steuereinheit dazu ausgebildet, die Signalerzeugungseinrichtung derart anzusteuern, dass diejenigen ersten und zweiten Spulen zweier Spulenpaare, die in Umfangsrichtung um 180° versetzt um das Messrohr herum angeordnet sind, ein Magnetfeld erzeugen, das in die gleiche Richtung gerichtet und vorzugsweise gleich groß ist. In einem solchen Fall ist die Messgenauigkeit besonders hoch. Vorzugsweise werden dabei immer zwei Messelektroden eingesetzt, wobei eine differenzielle Messspannung gemessen wird. Bei Einsatz nur einer Messelektrode würde sich die gemessene Messspannung auf das Potenzial beziehen, auf dem das Messrohr liegt.

Um auch nicht rotationssymmetrische Geschwindigkeitsverteilungen mit einer guten Genauigkeit messen zu können, ist die Steuereinheit dazu ausgebildet, die Signalerzeugungseinrichtung derart anzusteuern, dass das durch die Spulenpaare erzeugte Magnetfeld, welches das Messrohr durchsetzt, ein homogenes oder ein inhomogenes Magnetfeld ist. Dabei ist es möglich, dass die einzelnen Spulenpaare abwechselnd derart bestromt werden, dass ein homogenes Magnetfeld um die Längsachse des Messrohrs rotiert.

Die Signalerzeugungseinrichtung kann dabei die Spulen mit einem getakteten Gleichfeld oder mit einem sinusförmigen Signal anregen. Dabei können die Spulenpaare nacheinander, also zeitlich beabstandet zueinander, durch das getaktete Gleichfeld angeregt werden. Es wäre ebenfalls eine kodierte Anregung (CDMA) möglich. Umgekehrt wäre es auch möglich, dass die einzelnen Spulenpaare durch das sinusförmige Signal nacheinander, also zeitlich beabstandet, angeregt werden. Eine gleichzeitige Anregung unter Verwendung unterschiedlicher Frequenzen wäre hier ebenfalls möglich.

Zusätzlich ist es besonders vorteilhaft, wenn die Messeinrichtung einen I/Q-Demodulator umfasst, um die Messspannung von Störsignalen zu trennen. In diesem Fall würde in der In-Phase-Komponente das Messsignal zusammen mit etwaigen kapazitiven Übersprechern anliegen, wobei letztere herausgefiltert werden können. In der Quadratur-Phase-Komponente liegen lediglich weitere Störungen, wie Einkopplungen bzw. Wirbelströme an. Eine I/Q-Demodulation kann beispielsweise mittels des Heterodynverfahrens realisiert werden.

Das erfindungsgemäße Verfahren gemäß dem Anspruch 21 dient zum Ermitteln einer axialen Durchflussgeschwindigkeitsverteilung für ein magnetisch-induktives Durchflussmessgerät. Dieses arbeitet nach dem DAR-Verfahren. In dem DAR-Verfahren wird eine Gewichtungsfunktion eingesetzt. Erfindungsgemäß wurde in diese Gewichtungsfunktion ein iteratives Verfahren implementiert. Dadurch können Abweichungen zwischen einer rekonstruierten Durchflussgeschwindigkeitsverteilung und einer zugeführten Durchflussgeschwindigkeitsverteilung verringert werden.

Im Einzelnen gibt es nun eine Vielzahl von Möglichkeiten, das erfindungsgemäße magnetisch-induktive Durchflussmessgerät auszugestalten. Dazu wird verwiesen sowohl auf die den unabhängigen Patentansprüchen nachgeordneten Patentansprüche als auch auf die nachfolgende Beschreibung von bevorzugten Ausführungsbeispielen in Verbindung mit der Zeichnung. In der Zeichnung zeigt

Fig. 1A        ein erstes Ausführungsbeispiel eines erfindungsgemäßen magnetisch-induktiven Durchflussmessgeräts mit einem Messrohr, zwei Spulenpaaren und einer Messelektrode, die unmittelbar mit einer Signalerzeugungseinrichtung und einer Messeinrichtung verbunden sind,

Fig. 1B        ein weiteres Ausführungsbeispiel des erfindungsgemäßen magnetisch-induktiven Durchflussmessgeräts mit einem Messrohr, zwei Spulenpaaren und einer Messelektrode, die mittelbar mit einer Signalerzeugungseinrichtung und einer Messeinrichtung verbunden sind,

Fig. 2        einen Längsschnitt durch das Messrohr des erfindungsgemäßen magnetisch-induktiven Durchflussmessgeräts,

Fig. 3        ein Prinzipschaltbild eines Spulenpaars, das erläutert, dass das Magnetfeld in der Mitte der beiden Spulen des Spulenpaars lediglich eine Komponente senkrecht zur Durchflussrichtung besitzt,

Fig. 4        eine Reihenschaltung der beiden Spulen eines Spulenpaars,

Fig. 5        eine Draufsicht auf einen Querschnitt durch das Messrohr des erfindungsgemäßen magnetisch-induktiven Durchflussmessgeräts, der die symmetrische Anordnung der Spulen und der Messelektroden näher erläutert,

Fig. 6        einen räumliche Darstellung des erfindungsgemäßen magnetischinduktiven Durchflussmessgeräts mit mehreren Spulenpaaren und Messelektroden,

Fig. 7        eine vereinfachte Darstellung eines Querschnitts durch das Messrohr des erfindungsgemäßen magnetisch-induktiven Durchflussmessgeräts, der die Anordnung der Messelektroden näher erläutert,

Fig. 8A bis 8F        verschiedene Darstellungen eines Querschnitts durch das Messrohr des erfindungsgemäßen magnetisch-induktiven Durchflussmessgeräts, die unterschiedlich geformte magnetische Felder zeigen, und

Fig. 9        ein Ablaufdiagramm, welches die erfindungsgemäße Rekonstruktion der Durchflussgeschwindigkeitsverteilung erläutert.

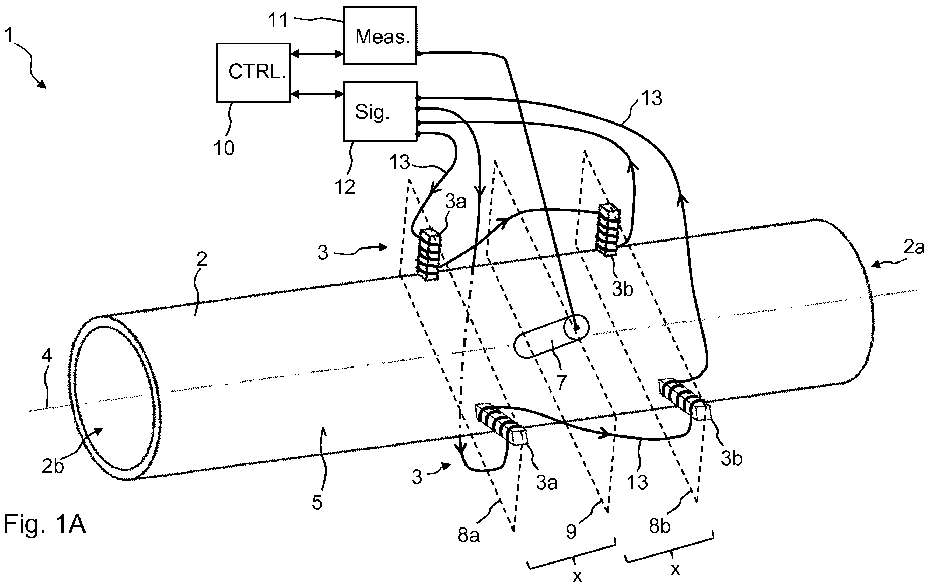

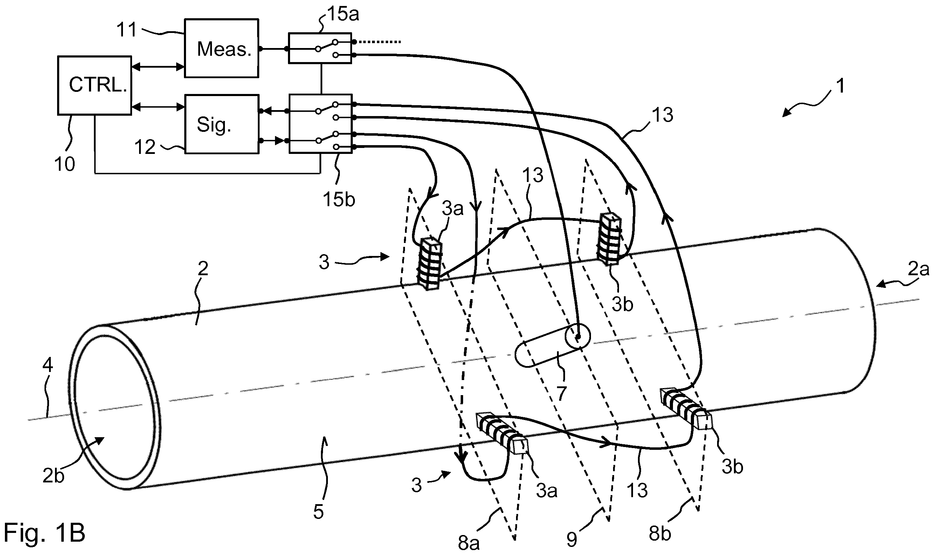

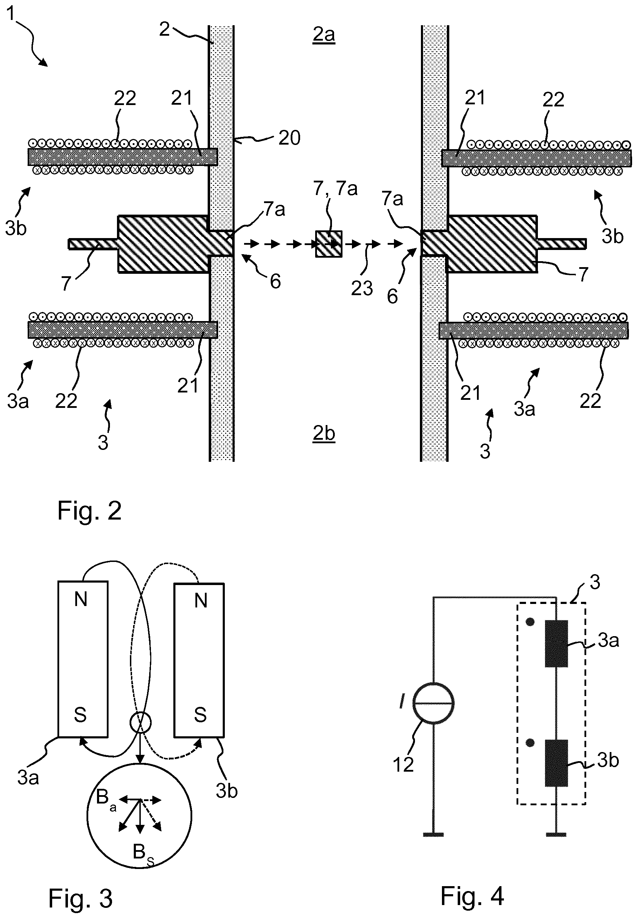

Fig. 1 zeigt ein erstes Ausführungsbeispiel eines erfindungsgemäßen magnetisch-induktiven Durchflussmessgeräts 1 mit einem Messrohr 2 und zwei Spulenpaaren 3 und zumindest einer Messelektrode 7. Das Messrohr 2 weist einen Einlaufabschnitt 2a und einen Auslaufabschnitt 2b auf, die in Axialrichtung 4 des Messrohrs 2 voneinander beabstandet sind. In Fig. 1A ist eine Achse dargestellt, die in Axialrichtung 4 des Messrohrs 2 verläuft. Das Messrohr 2 weist an seiner Umfangswandung 5 zumindest eine Einführöffnung 6 (in Fig. 2 dargestellt) auf, in die die zumindest eine Messelektrode 7 mit ihrem Elektrodenkopf 7a (in Fig. 2 dargestellt) eingreift bzw. angeordnet ist.

Das Spulenpaar 3 umfasst eine erste Spule 3a und eine zweite Spule 3b. Sowohl die erste Spule 3a, als auch die zweite Spule 3b des Spulenpaars 3, sind in Axialrichtung 4 des Messrohrs 2 versetzt zueinander an der Umfangswandung 5 des Messrohrs 2 angeordnet. Die erste und die zweite Spule 3a, 3b sind vorzugsweise einzig, also ausschließlich in Axialrichtung versetzt zueinander angeordnet. Sie sind insbesondere nicht in Umfangsrichtung versetzt zueinander angeordnet.

Die Messelektrode 7 ist an einem Umfangsbereich der Umfangswandung 5 des Messrohrs 2 an diesem angeordnet, der zwischen der ersten und der zweiten Spule 3a, 3b des Spulenpaars 3, liegt. In Fig. 1A und auch im Hinblick auf Fig. 2 sind die erste und die zweite Spule 3a, 3b des Spulenpaars 3 radial zur Axialrichtung 4 des Messrohrs 2 und senkrecht zu einer Durchflussrichtung an der Umfangswandung 5 des Messrohrs 2 angeordnet. Gleiches gilt auch für die zumindest eine Messelektrode 7.

Die Spulen 3a, 3b des Spulenpaars 3 sind vorzugsweise hinsichtlich ihrer Eigenschaften wie Geometrie und/oder Wicklungsanzahl und/oder Wicklungsquerschnitt und/oder Herstellungsmaterial identisch zueinander aufgebaut. Dies ist notwendig, weil die Spulen 3a, 3b des Spulenpaars stets zur gleichen Zeit mit dem vorzugsweisen gleichen Strom bestromt werden, so dass durch ihren identischen Aufbau sichergestellt ist, dass die von ihnen erzeugten Magnetfelder jeweils gleich groß sind und in dieselbe Richtung gerichtet sind.

In Fig. 1A, wie auch in Fig. 1B, sind die ersten Spulen 3a aller Spulenpaare 3 in einer ersten Spulenebene 8a angeordnet. Diese erste Spulenebene 8a verläuft senkrecht durch das Messrohr 2. Gleiches gilt auch für die zweiten Spulen 3b aller Spulenpaare 3. Diese sind in einer zweiten Spulenebene 8b angeordnet, die senkrecht durch das Messrohr 2 verläuft. Ebenfalls sind alle Messelektroden 7 in einer Messebene 9 angeordnet, die senkrecht durch das Messrohr 2 verläuft. Die erste Spulenebene 8a und die zweite Spulenebene 8b, sowie die Messebene 9 sind in Axialrichtung 4 voneinander beabstandet parallel zueinander angeordnet. Die Messebene 9 ist dabei zwischen der ersten Spulenebene 8a und der zweiten Spulenebene 8b angeordnet. Sie ist gleichweit von beiden Spulenebenen 8a, 8b beabstandet. Dies wird durch den Abstand x in der Zeichnungsfigur 1A visualisiert.

Das magnetisch-induktive Durchflussmessgerät 1 umfasst außerdem eine Steuereinheit 10, eine Messeinrichtung 11 und eine Signalerzeugungseinrichtung 12. In Fig. 1A sind die beiden Spulenpaare 3 (es können auch mehr Spulenpaare 3 sein) unmittelbar mit einem Ausgang der Signalerzeugungseinrichtung 12 verbunden. Diese Verbindung erfolgt über die Verbindungsleitungen 13. Bei der Signalerzeugungseinrichtung 12 handelt es sich vorzugsweise um eine Stromquelle. Die Signalerzeugungseinrichtung 12 kann die Spulen 3a, 3b der einzelnen Spulenpaare 3 sowohl mit einem getakteten Gleichfeld, als auch mit einem sinusförmigen Signal anregen. Die Signalerzeugungseinrichtung wird dabei von der Steuereinheit 10 angesteuert.

Damit die beiden Spulen 3a, 3b eines Spulenpaars 3 in etwa das gleiche magnetische Feld erzeugen, sind sie nicht nur identisch zueinander aufgebaut, sondern auch in Reihe geschalten, so dass sie von dem gleichen elektrischen Strom durchflossen werden.

Die zumindest eine Messelektrode 7 ist in Fig. 1A mit der Messeinrichtung 11 verbunden. Vorzugsweise gibt es mehr als eine Messelektrode 7, wobei die Messeinrichtung 11 dazu ausgebildet ist, eine vorzugweise differenzielle Spannung zwischen jeweils zwei Messelektroden 7 zu messen.

Im Unterschied zu Fig. 1A, sind in dem weiteren Ausführungsbeispiel des erfindungsgemäßen magnetisch-induktiven Durchflussmessgeräts 1 in Fig. 1B die Spulen 3a, 3b der einzelnen Spulenpaare 3 lediglich mittelbar mit der Signalerzeugungseinrichtung 12 verbunden. Gleiches gilt auch für die zumindest eine Messelektrode 7, die ebenfalls lediglich mittelbar mit der Messeinrichtung 11 verbunden ist.

In diesem Fall umfasst die Messeinrichtung 11 lediglich einen Signaleingang. Aus diesem Grund gibt es eine erste Schalteinheit 15a, die mehrere Eingänge aufweist, an die die einzelnen Messelektroden 7 angeschlossen sind. Diese Schalteinheit verbindet im Folgenden, gesteuert durch die Steuereinheit 10, einzig eine Messelektrode 7 zur gleichen Zeit mit dem Eingang der Messeinrichtung 11. Der Schalter der ersten Schalteinheit 15a, kann im einfachsten Fall als Relais ausgebildet sein. Vorzugsweise handelt es sich allerdings um ein Halbleiterschaltelement, so dass in sehr schnellen Intervallen die Messspannung der Messeinrichtung 11 zugeführt werden kann. Bevorzugt werden allerdings durch die erste Schalteinheit 15a immer zwei Messspannungen der Messeinrichtung 11 zugeführt, wodurch eine differenzielle Messung möglich ist. Eine solche Schalteinheit ist in Fig. 1B allerdings nicht dargestellt. Die Entscheidung, welche Messspannungen von welchen Messelektroden 7 der Messeinrichtung 11 zugeführt werden, erfolgt über die Steuereinheit 10.

In Fig. 1B ist außerdem noch eine zweite Schalteinheit 15b dargestellt. Die zweite Schalteinheit 15b verbindet einen Aus- bzw. Eingang der Signalerzeugungseinrichtung 12 mit einem von mehreren Spulenpaaren 3. Dies bedeutet, dass die Spulenpaare 3 lediglich mittelbar mit der Signalerzeugungseinrichtung 12 verbunden sind. In dem Ausführungsbeispiel aus Fig. 1B kann folglich lediglich ein Spulenpaar 3 zur gleichen Zeit bestromt werden. Es ist natürlich auch möglich, dass es mehr als eine erste bzw. zweite Schalteinheit 15a, 15b gibt. In diesem Fall können mehrere Spulenpaare zur gleichen Zeit bestromt werden.

Es ist ebenfalls möglich, dass die Signalerzeugungseinrichtung 12 die einzelnen Spulenpaare 3 mit unterschiedlichen Signalen anregt. Diese Signale können sich beispielsweise in ihrer Frequenz unterscheiden (FDMA; Frequency-Division Multiple Access). Die einzelnen Spulenpaare 3 können auch mit einem sinusförmigen Signal zeitlich beanstandet (TDMA; Time-Division Multiple Access) zueinander angeregt werden.

Für den Fall, dass die Signalerzeugungseinrichtung 12 die Spulen 3a, 3b des Spulenpaars 3 mit einem getakteten Gleichfeld anregt, kann dieses getaktete Gleichfeld die einzelnen Spulen 3a, 3b zeitlich beabstandet anregen. Es ist ebenfalls möglich, dass dieses getaktete Gleichfeld kodiert ist (CDMA; Code Division Multiple Access), wobei in diesem Fall die Signalerzeugungseinrichtung 12 sicherstellt, dass keine Sättigung der einzelnen Spulen 3a, 3b erfolgt.

Bei einer kodierten Anregung (CDMA) mittels eines getakteten Gleichfelds, kann eine gleichzeitige Felderregung erfolgen. Beispielsweise können alle senkrecht zu einer gedachten Bezugsebene angeordneten Spulen im Intervall von einer Sekunde für eine bestimmte Zeitdauer bestromt werden, wobei alle Spulen die parallel zu der gleichen Bezugsebene angeordnet sind, in einem Intervall von 0,5 Sekunden für eine weitere bestimmte Zeitdauer bestromt werden.

Die Messeinrichtung 11 weist in diesem Fall vorzugsweise noch einen I/Q-Demodulator auf, um die Messspannung von den Störsignalen zu trennen.

Bei Anregung der einzelnen Spulenpaare mit unterschiedlichen Frequenzen (FDMA), kann die gleichzeitige Anregung aller Spulenpaare 3 erfolgen, wobei alle Feldformen gleichzeitig angeregt werden können. Dadurch ist es ebenfalls möglich, dass eine begrenzte Feldstärke für jedes Teilfeld eingestellt werden kann.

Um die Genauigkeit des magnetisch-induktiven Durchflussmessgeräts 1 zu erhöhen, kann dieses kalibriert werden. Hierzu kann die Geschwindigkeit eines Messfluids mit einem anderen bekannten Verfahren gemessen bzw. entsprechend vorgegeben werden. Aus der Abweichung von der gemessenen Geschwindigkeit mit der tatsächlichen Geschwindigkeit, kann ein konstanter Faktor ermittelt werden, der für eine lineare Skalierung notwendig ist. Die Steuereinheit 10 ist dabei dazu ausgebildet, dieses Kalibrierverfahren durchzuführen. Weiterhin kann bei einem Nulldurchfluss eine Offset-Kompensation durchgeführt werden. Auch hier wird ein Faktor zur Skalierung ermittelt, der für die Bestimmung der Durchflussgeschwindigkeit des Messfluids Verwendung findet.

Fig. 2 zeigt einen Längsschnitt durch das Messrohr 2 des erfindungsgemäßen magnetisch-induktiven Durchflussmessgeräts 1. Dargestellt sind drei Messelektroden 7. Diese Messelektroden 7 mit ihren Elektrodenköpfen 7a, sind für den Fall, dass eine Innenwandung 20 des Messrohrs 2 elektrisch leitfähig ist, von dieser galvanisch getrennt. Die Elektrodenköpfe 7a schließen bündig mit der Innenwandung 20 des Messrohrs 2 ab. Dadurch wird das Strömungsverhalten möglichst wenig beeinflusst. Die dargestellten Messelektroden 7 sind in einem Winkel von 90° zueinander versetzt an der Umfangswandung 5 des Messrohrs 2 angeordnet.

In Fig. 2 sind ebenfalls zwei Spulenpaare 3 dargestellt, die eine erste Spule 3a und eine zweite Spule 3b aufweisen. Die Spulen 3a, 3b weisen jeweils einen Spulenkern 21 auf, um den die einzelnen Wicklungen 22 herum angeordnet sind. Der Spulenkern 21 erstreckt sich teilweise in die Umfangswandung 5 des Messrohrs 2 hinein. Dies ist allerdings nicht zwingend notwendig. Der Spulenkern 21 könnte auch von dem Messrohr 2 beabstandet sein.

Die beiden Spulenpaare 3 in Fig. 2, sind an der Umfangswandung 5 des Messrohrs 2 um 180° voneinander beabstandet angeordnet. Die Signalerzeugungseinrichtung 12 regt die jeweiligen ersten und zweiten Spulen 3a, 3b beider Spulenpaare 3 derart an, dass durch diese ein Magnetfeld erzeugt wird, das in die gleiche Richtung gerichtet und vorzugsweise gleich groß ist. Dies bedeutet, dass der magnetische Fluss den einen Spulenkern 21 in umgekehrter Richtung durchfließt als den anderen Spulenkern 21.

Dieses Magnetfeld weist insbesondere in der Mitte zwischen zwei ersten und zweiten Spulen 3a, 3b lediglich eine Komponente auf, die senkrecht zur Durchflussrichtung des Messfluids verläuft. Eine solche Magnetfeldkomponente 23 ist durch die Pfeile in Fig. 2 dargestellt.

In Fig. 2 sind die ersten und zweiten Spulen 3a, 3b eines Spulenpaars 3 mit ihren jeweiligen Spulenkern 21 derart an der Umfangswandung 5 des Messrohrs 2 angeordnet, dass der magnetische Fluss, der durch den jeweiligen Spulenkern 21 geführt wird, am Übergang des Spulenkerns 21 zum Messrohr 2 senkrecht zur Durchflussrichtung des Messfluids verläuft.

Fig. 3 erläutert ein Prinzipschaltbild eines Spulenpaars 3, durch das anschaulich erläutert wird, weshalb das Magnetfeld in der Mitte der beiden Spulen 3a, 3b des Spulenpaars 3 lediglich eine Komponente $B_s$ senkrecht zur Durchflussrichtung besitzt. Für den Fall, dass das Magnetfeld beider Spulen 3a, 3b gleich groß ist und in die gleiche Richtung gerichtet ist, heben sich zumindest diejenigen Komponenten $B_a$ des Magnetfelds zumindest überwiegend, vorzugweise vollständig gegenseitig auf, die in Durchflussrichtung, also in Axialrichtung 4 verlaufen. Durch diesen Bereich verläuft, wie in den Fig. 1A und 1B dargestellt, die Messebene 9.

Fig. 4 zeigt ein Ersatzschaltbild eines elektrischen Schaltkreises, der verdeutlicht, dass die ersten und die zweiten Spulen 3a, 3b in Reihe mit einer Stromquelle I geschalten sind. Die Wicklungen 22 sind ebenfalls gleich ausgerichtet. Beide Spulen 3a, 3b eines Spulenpaars 3 sind vorzugsweise identisch zueinander aufgebaut.

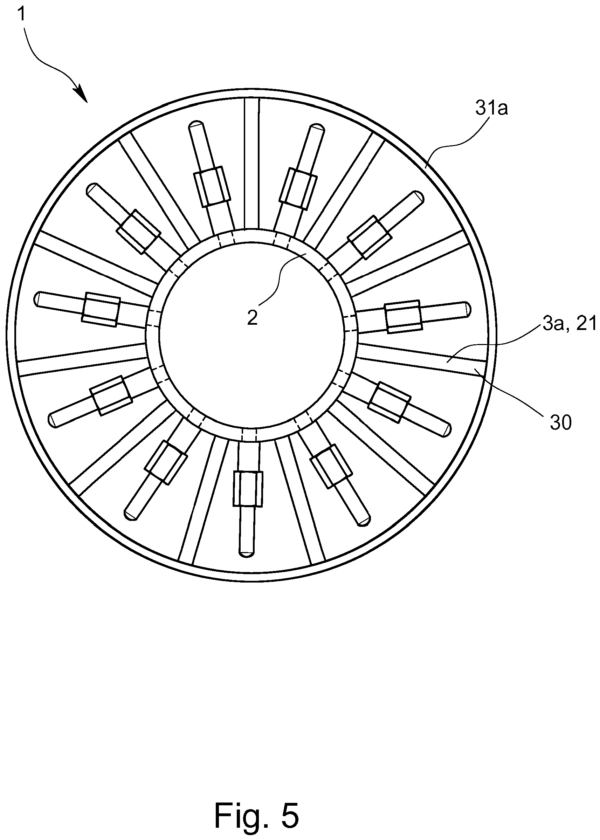

Fig. 5 zeigt eine Draufsicht auf einen Querschnitt durch das Messrohr 2. Dadurch, dass die erste und die zweite Spule 3a, 3b jedes Spulenpaars 3 ausschließlich in Axialrichtung 4 zueinander versetzt sind, sind in Fig. 5 einzig die Spulenkerne 21 der ersten Spule 3a dargestellt. Auf die Darstellung der Wicklungen 22 wurde aus zur bessere Übersichtlichkeit verzichtet. Die Spulenkerne 21 der zweiten Spulen 3b sind überlappungsfrei und deckungsgleich zu den dargestellten Spulenkernen 21 angeordnet.

Die Spulenkerne 21 der ersten Spule 3a sind an ihrem ersten Ende 30 über ein erstes Joch 31a miteinander verbunden. Das erste Joch 31a weist eine runde Querschnittsform auf. Das erste Joch 31a ist vorzugsweise einteilig ausgebildet.

Die ersten Spulen 3a der Spulenpaare 3 sind axialsymmetrisch zu der durch das Messrohr 2 verlaufenden Axialrichtung 4 an der Umfangswandung 5 des Messrohrs 2 angeordnet.

Die Messelektroden 7 sind in Umfangsrichtung versetzt zu den ersten und zweiten Spulen 3a, 3b jedes Spulenpaars 3 angeordnet.

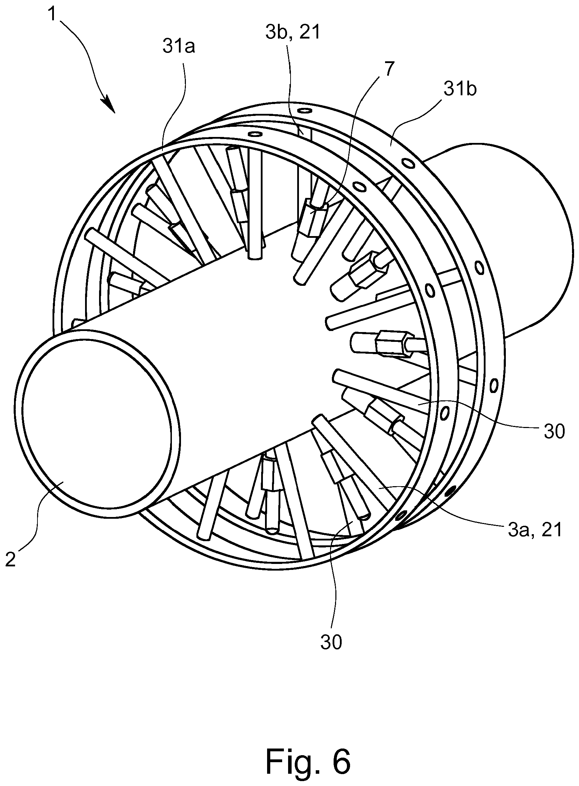

Fig. 6 zeigt eine räumliche Darstellung des magnetisch-induktiven Durchflussmessgeräts 1, wobei das Messrohr 2 aufgeschnitten dargestellt ist. Das erste Ende 30 der Spulenkerne 21 der ersten Spulen 3a ist mit dem ersten Joch 31a verbunden und die ersten Enden 30 der Spulenkerne 21 der zweiten Spulen 3b sind mit einem zweiten Joch 31b verbunden. Der Aufbau des zweiten Jochs 31b entspricht demjenigen des ersten Jochs 31a. Insgesamt gibt es n Spulenpaare 3, wobei in dem Beispiel aus Fig. 6 für n der Wert zwölf gewählt wurde.

In Fig. 6 gibt es außerdem zwölf Messelektroden 7. Die zumindest n Spulenpaare sind jeweils um $\alpha$ = 360°/n beabstandet an der Umfangswandung 5 des Messrohrs 2 angeordnet. In diesem Fall beträgt der Winkel 30°. Gleiches gilt auch für die m Messelektroden 7, die um $\alpha$ = 360°/m beabstandet zueinander in Umfangsrichtung 5 angeordnet sind. In diesem Fall entspricht die Anzahl der Spulenpaare 3 auch der Anzahl der Messelektroden 7. Dies muss allerdings nicht zwingend der Fall sein.

Für den Fall, dass es gleich viele Messelektroden 7 wie Spulenpaare 3 gibt, sind die Messelektroden 7 um einen Winkel $\beta$ = $\alpha$/2 gegenüber den Spulenpaaren 3 in Umfangsrichtung versetzt zueinander angeordnet. In dem Beispiel aus Fig. 6 sind die Messelektroden 7 um 15° gegenüber den Spulenpaaren 3 versetzt zueinander angeordnet. Es könnte auch sein, dass die Messelektroden 7 lediglich axial versetzt zu den ersten und zweiten Spulen 3a, 3b des jeweiligen Spulenpaares 3 angeordnet sind. In diesem Fall wären die Messelektroden 7 jeweils vollständig überlappend zu den ersten und zweiten Spulen 3a, 3b des Spulenpaars 3 angeordnet.

Die einzelnen Spulen 3a, 3b der Spulenpaare 3, wie auch die einzelnen Messelektroden 7, sind radial an dem Messrohr 2 angeordnet. Eine Ebene, die sich durch die Längsachsen der ersten und zweiten Spulen 3a, 3b eines Spulenpaars 3 erstreckt, verläuft vorzugsweise durch die Längsachse 4 des Messrohrs 2.

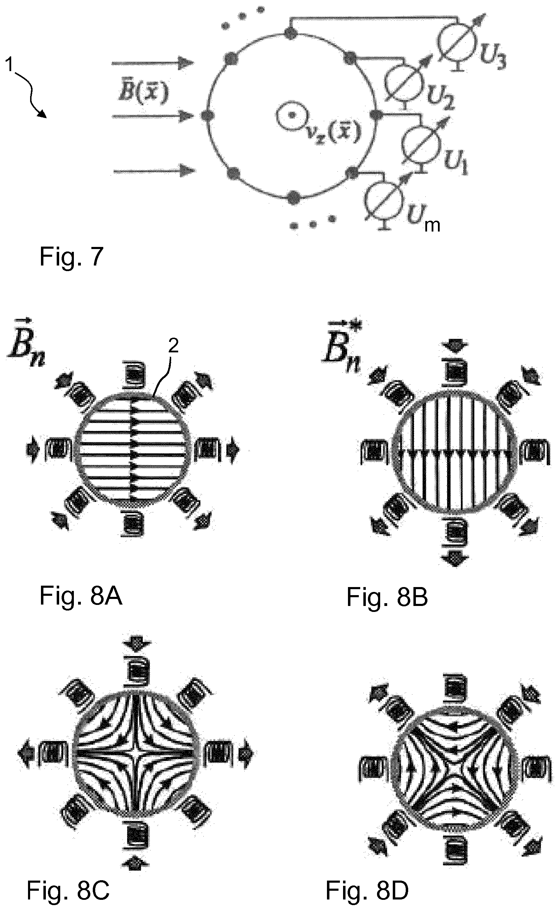

Fig. 7 veranschaulicht den Einsatz mehrerer Messelektroden 7, die gleichmäßig voneinander beabstandet an der Umfangswandung 5 des Messrohrs 2 angeordnet sind.

Die Fig. 8A bis 8F zeigen verschieden Möglichkeiten, wie die Spulenpaare 3 angeregt werden können, um unterschiedliche Magnetfelder zu erzeugen. In den Fig. 8A und 8B sind homogene Magnetfelder gezeigt. Die Spulen 3a, 3b, die ausschließlich in einer linken Hälfte des Messrohrs 2 angeordnet sind, werden mit einem ersten, vorzugsweise gleich hohen Strom bestromt und die Spulen 3a, 3b, die ausschließlich in der rechten Hälfte des Messrohrs 2 angeordnet sind, werden ebenfalls mit einem zweiten, vorzugsweise gleich hohen Strom bestromt. Der Strom, insbesondere die Stromrichtung, ist dabei derart gewählt, dass die einzelnen Spulenpaare 3 dabei gleichgerichtet sind.

In Fig. 8B werden einzig die Spulenpaare 3 bestromt, die ausschließlich in der oberen, bzw. ausschließlich in der unteren Hälfte des Querschnitts durch das Messrohr 2 angeordnet sind.

In der Fig. 8C wird lediglich jedes zweite Spulenpaar 3 bestromt, wobei die Stromrichtung sich abwechselnd ändert. Gleiches gilt auch für die Fig. 8D, wobei jetzt die Spulenpaare 3 bestromt werden, die in Fig. 8C unbestromt waren. Werden jeweils abwechselnd (iterativ) verschiedene Spulenpaare 3 nacheinander bestromt, so kann ein rotierendes Magnetfeld erzeugt werden.

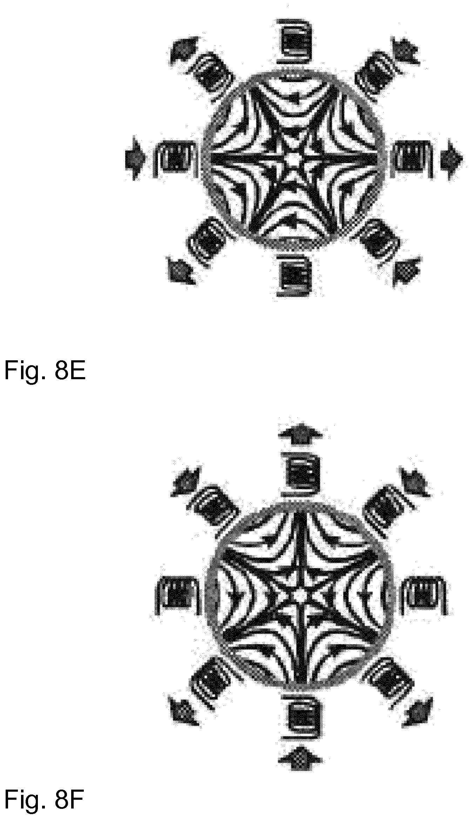

In der Fig. 8E werden wieder lediglich die Spulenpaare 3 bestromt, die im Querschnitt ausschließlich in der linken oder ausschließlich in der rechten Seite des Messrohrs 2 angeordnet sind. Dabei wechselt sich die Stromrichtung, mit der die Spulenpaare 3 vom Strom durchflossen werden, abwechselnd ab.

Gleiches gilt auch für die Fig. 8F. Hier werden lediglich die Spulenpaare 3 bestromt, die sich ausschließlich in einer oberen bzw. ausschließlich in einer unteren Hälfte des Querschnitts des Messrohrs 2 befinden. Auch hier wechselt die Stromrichtung jeweils zwischen zwei benachbarten Spulenpaaren 3.

Um die Durchflussgeschwindigkeit bestimmten zu können, kann ein tomographisches Rekonstruktionsverfahren verwendet werden. Hierzu gehören analytische Verfahren (z.B. direct fourier method), diskrete Verfahren (z.B. ART) und die direkte algebraische Rekonstruktion (engl. Direct Algebraic Reconstruction (DAR)).

Im Nachfolgenden wird ein Verfahren zur Bestimmung der Durchflussgeschwindigkeit erläutert, welches auf das DAR-Verfahren aufbaut. Das DAR-Verfahren ist ausführlich in der Veröffentlichung "TRÄCHTLER, A und WERNSDÖRFER A., (1995), Direct Algebraic Reconstruction in Electromagnetic Flow Tomography, Frontiers in Industrial Process Tomography, Seiten 159 bis 170" beschrieben.

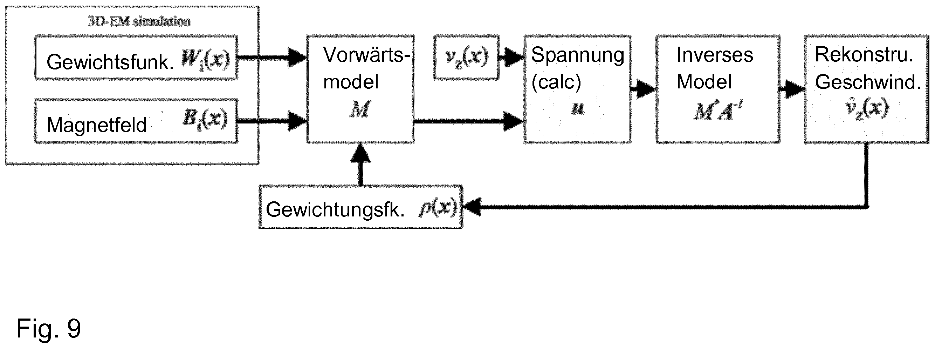

Fig. 9 zeigt ein Model, um die Durchflussgeschwindigkeit zu ermitteln. Dieses Modell ist aus der oben genannten Veröffentlichung bekannt. Im Unterschied zu der Veröffentlichung erläutert die hier vorliegende Erfindung - das Verfahren betreffend - einen verbesserten Aufbau der Kalibrierfunktion p(x), wodurch sich genauere Messergebnisse für die Durchflussgeschwindigkeit erzielen lassen. Die Kalibrierfunktion p(x) wird im Weiteren auch als Gewichtungsfunktion p(x) bezeichnet.

Im Folgenden wird das DAR-Verfahren kurz vorgestellt. Die gesuchte Durchflussgeschwindigkeit, bzw. die axiale Durchflussgeschwindigkeitsverteilung $v_z(\mathbf{x})$ ist in der nachfolgenden Gleichung enthalten:

$$u_i = \iint_\Omega \left( W_{x,i}'(\mathbf{x}) B_{y,i}(\mathbf{x}) - W_{y,i}'(\mathbf{x}) B_{x,i}(\mathbf{x}) \right) v_z(\mathbf{x})\, dx\, dy \qquad (1)$$

Bei den Term **W'** handelt es sich um die (dreidimensionale) Gewichtsfunktion. Diese ist von der Geometrie des magnetisch-induktiven Durchflussmessgerätes abhängig und wird vorzugsweise mittels einer dreidimensionalen elektromagnetischen Simulation bestimmt. Eine analytische Bestimmung dieser Größe wäre auch möglich, allerdings ist zu beachten, dass die Messelektroden 7 einen Elektrodenkopf 7a aufweisen, der nicht punktförmig ist, sondern eine nicht zu vernachlässigende Oberfläche aufweist. Dabei sind $\mathbf{W}_{x,i}$ und $\mathbf{W}_{y,i}$ die x- und y-Komponenten der Gewichtsfunktion. $\mathbf{B}_{x,i}$ und $\mathbf{B}_{y,i}$ sind die Komponenten des magnetischen Felds. Der Operator M beschreibt eine Abbildung (engl. mapping) des Geschwindigkeitsfelds $v_z(\mathbf{x})$ in den endlichen Raum $m$ der Spannungsmessung:

$$u_i = \iint_\Omega \rho(\mathbf{x})\, \rho^{-1}(\mathbf{x}) \left( W_{x,i}'(\mathbf{x}) B_{y,i}(\mathbf{x}) - W_{y,i}'(\mathbf{x}) B_{x,i}(\mathbf{x}) \right) v_z(\mathbf{x})\, dx\, dy$$
$$= \iint_\Omega \rho(\mathbf{x})\, k_i(\mathbf{x})\, v_z(\mathbf{x})\, dx\, dy = M_i\, v_z(\mathbf{x}) \qquad (2)$$

Bei p(x) handelt es sich um eine Gewichtungsfunktion. Der erfindungsgemäße Aufbau dieser Gewichtungsfunktion wird weiter unten noch genauer beschrieben. Die charakteristische Funktion $k_i(\mathbf{x})$ beinhaltet das physikalische Modell des magnetisch-induktiven Durchflussmessgerätes für jede Messung i. Für die Abbildung gilt hier:

$$\boldsymbol{u} = M\, v_z(\boldsymbol{x}) \qquad\qquad (3)$$

wobei u ein Vektor darstellt, der m Spannungsmessungen beinhaltet.

Um die Gleichung (3) nach $v_z(\boldsymbol{x})$ auflösen zu können, müssten beide Seiten mit $M^{-1}$ multipliziert werden. Allerdings gibt es keine Inverse zu dem Operator M. Daher wird eine pseudo-Inverse zur Rekonstruktion der axialen Durchflussgeschwindigkeitsverteilung $v_z(\boldsymbol{x})$ verwendet:

$$\hat{v}_z(\boldsymbol{x}) = M^+ \boldsymbol{u} = M^*\left(MM^*\right)^{-1}\boldsymbol{u} = M^*A^{-1}\boldsymbol{u} = M^*\tilde{\boldsymbol{u}} \qquad\qquad (4)$$

$\hat{v}_z(x)$ ist dabei die rekonstruierte Durchflussgeschwindigkeitsverteilung und $M^*$ ist die adjungierte zu M und $\tilde{u}$ ist ein Hilfsvektor. Die Elemente $a_{ij}$ der (m x m)-Matrix A können wie folgt berechnet werden:

$$a_{ij} = \iint_\Omega \rho(\boldsymbol{x})\, k_i(\boldsymbol{x})\, k_j(\boldsymbol{x})\, dx\, dy \qquad\qquad (5)$$

Die Matrix A beinhaltet das physikalische Modell des magnetisch-induktiven Durchflussmessgerätes und muss daher nur einmal berechnet werden. Die einzelnen Elemente $a_{ij}$ der Matrix sind mit der Gewichtungsfunktion p(x) gewichtet.

Schließlich gilt für die rekonstruierte Durchflussgeschwindigkeitsverteilung $\hat{v}_z(x)$:

$$\hat{v}_z(\boldsymbol{x}) = M^*A^{-1}\boldsymbol{u} = \sum_i^m k_i(\boldsymbol{x})\tilde{u}_i \qquad\qquad (6)$$

Das DAR-Verfahren erlaubt gemäß Gleichung (2) das Gewichten von einzelnen Komponenten mit einer Gewichtungsfunktion. Mit einer bekannten zugeführten Durchflussgeschwindigkeitsverteilung, kann die Abweichung der rekonstruierten Durchflussgeschwindigkeitsverteilung von der zugeführten Durchflussgeschwindigkeitsverteilung dazu verwendet werden, um die Effekte, die mit einer hohen Empfindlichkeit in der direkten Umgebung der Elektroden einhergehen, zu reduzieren. Hierfür wird ein iteratives Verfahren gewählt, um die Gewichtungsfunktion nach Berechnung einer Durchflussgeschwindigkeitsverteilung in einem ersten Schritt für die Berechnung einer späteren (genaueren) Durchflussgeschwindigkeitsverteilung in einem zweiten Schritt anzupassen. Dies gelingt durch Gleichung (7):

$$\rho_{n+1}(\boldsymbol{x}) = \rho_n(\boldsymbol{x}) + b\left(\hat{v}_z(\boldsymbol{x}) - v_z(\boldsymbol{x})\right) \qquad\qquad (7)$$

Dabei ist n eine Zählvariable (engl. iteration count) für die jeweilige Iteration und b stellt eine Feedback-Konstante dar. Die Feedback-Konstante kann Werte zwischen 0 und 1 annehmen. Die Gewichtungsfunktion übt dabei keinen Einfluss auf die zu erwarteten Spannungen u an den Elektroden aus. Die Gewichtungsfunktion p(x) wird allerdings zur Gewichtung der charakteristischen Funktionen $k_i(x)$ verwendet und kann daher die Inhomogenitäten in dem physikalischen Modell kompensieren. Nach einigen Iterationen konvergiert die rekonstruierte Durchflussgeschwindigkeitsverteilung auf den Wert der zugeführten Durchflussgeschwindigkeitsverteilung $v_z(\boldsymbol{x})$. Passiert dies nicht, dann muss für die Feedback-Konstante b ein anderer Wert verwendet werden. Die Feedback-Konstante kann beispielsweise nach allen n=N Iterationen (z.B. N > 10, 20, 30 40 oder 50) um einen bestimmten Wert erhöht oder erniedrigt werden, und zwar solange, bis eine Konvergenz eintritt. Ggf. muss die Gewichtungsfunktion $\rho_n(x)$ in Gleichung (7) auf null zurückgesetzt werden.

Das Verfahren kann auf einem herkömmlichen Computerchip, aber auch auf einem Mikrokontroller oder einem FPGA ausgeführt werden.

Die Erfindung ist nicht auf die beschriebenen Ausführungsbeispiele beschränkt. Im Rahmen der Erfindung, welche durch die angefügten Patentansprüche definiert ist, sind alle beschriebenen und/oder gezeichneten Merkmale beliebig miteinander kombinierbar.

**Bezugszeichenliste**

| | |
|---|---|
| 1 | Durchflussmessgerät |
| 2 | Messrohr |
| 2a | Einlaufabschnitt |
| 2b | Auslaufabschnitt |
| 3 | Spulenpaar |
| 3a | erste Spule |
| 3b | zweite Spule |
| 4 | Axialrichtung |
| 5 | Umfangswandung |
| 6 | Einführöffnung |
| 7 | Messelektrode |
| 8a | erste Spulenebene |
| 8b | zweite Spulenebene |
| 9 | Messebene |
| 10 | Steuereinheit |
| 11 | Messeinrichtung |
| 12 | Signalerzeugungseinrichtung |
| 13 | Verbindungsleitung |
| 15a | erste Schalteinheit |
| 15b | zweite Schalteinheit |
| 20 | Innenwandung |
| 21 | Spulenkern |
| 22 | Wicklungen |
| 23 | Magnetfeldkomponente |
| 30 | erstes Ende |
| 31a | erstes Joch |
| 31b | zweites Joch |

**Patentansprüche**

**1.** Magnetisch-induktives Durchflussmessgerät (1) mit einem Messrohr (2) und zumindest einer Messelektrode (7), wobei das Messrohr (2) einen Einlaufabschnitt (2a) und einen Auslaufabschnitt (2b), die in Axialrichtung (4) des Messrohrs (2) voneinander beabstandet sind, umfasst, wobei das Messrohr (2) an seiner Umfangswandung (5) zumindest eine Einführöffnung (6) aufweist, wobei die zumindest eine Messelektrode (7) mit ihrem Elektrodenkopf (7a) in der zumindest einen Einführöffnung (6) angeordnet ist, wobei das magnetisch-induktive Durchflussmessgerät (1) zumindest n Spulenpaare (3) mit $n \geq 2$ umfasst, wobei jedes der zumindest n Spulenpaare (3) eine erste und eine zweite Spule aufweist (3a, 3b), wobei die erste und die zweite Spule (3a, 3b) jedes der zumindest n Spulenpaare (3) in Axialrichtung (4) des Messrohrs (2) versetzt zueinander an der Umfangswandung (5) des Messrohrs (2) angeordnet sind, wobei die erste und die zweite Spule (3a, 3b) jedes der zumindest n Spulenpaare (3) in Draufsicht auf einen Querschnitt durch das Messrohr (2) zumindest teilweise überlappend zueinander angeordnet sind, wobei die zumindest eine Messelektrode (7) an einem Umfangsbereich der Umfangswandung (5) des Messrohrs (2) an diesem angeordnet ist und wobei der Umfangsbereich zwischen der ersten und der zweiten Spule (3a, 3b) jedes der zumindest n Spulenpaare (3) liegt, **dadurch gekennzeichnet, dass** die erste Spule und die zweite Spule (3a, 3b) jedes der zumindest n Spulenpaare (3) elektrisch in Reihe geschaltet sind.

**2.** Magnetisch-induktives Durchflussmessgerät (1) nach Anspruch 1, **dadurch gekennzeichnet, dass** die erste und die zweite Spule (3a, 3b) jedes der zumindest n Spulenpaare (3) einzig in Axialrichtung (4) versetzt zueinander angeordnet sind und/oder dass sich die erste und die zweite Spule (3a, 3b) jedes der zumindest n Spulenpaare (3) in Draufsicht auf einen Querschnitt durch das Messrohr (2) vollständig überlappen und/oder deckungsgleich zueinander angeordnet sind.

3. Magnetisch-induktives Durchflussmessgerät (1) nach Anspruch 1 oder 2, **dadurch gekennzeichnet, dass** die erste und die zweite Spule (3a, 3b) jedes der zumindest n Spulenpaare (3) radial zur Axialrichtung (4) des Messrohrs (2) und senkrecht zu einer Durchflussrichtung an der Umfangswandung (5) des Messrohrs (2) angeordnet sind und/oder dass die zumindest eine Messelektrode (7) radial zur Axialrichtung (4) des Messrohrs (2) und senkrecht zu einer Durchflussrichtung an der Umfangswandung (5) des Messrohrs (2) angeordnet ist.

4. Magnetisch-induktives Durchflussmessgerät (1) nach einem der vorherigen Ansprüche, **dadurch gekennzeichnet, dass** die zumindest eine Messelektrode (7) gleich weit von der ersten Spule (3a) jedes der zumindest n Spulenpaare (3) entfernt ist wie von der zweiten Spule (3b) des jeweiligen Spulenpaars (3).

5. Magnetisch-induktives Durchflussmessgerät (1) nach einem der vorherigen Ansprüche, **dadurch gekennzeichnet, dass** die zumindest eine Messelektrode (7) in Draufsicht auf einen Querschnitt durch das Messrohr (2):

a) überlappend zu der ersten und zweiten Spule (3a, 3b) jedes der zumindest n Spulenpaare (3) angeordnet ist; oder
b) in Umfangsrichtung versetzt zu der ersten und zweiten Spule (3a, 3b) des jeweiligen Spulenpaars (3) angeordnet ist.

6. Magnetisch-induktives Durchflussmessgerät (1) nach einem der vorherigen Ansprüche, **dadurch gekennzeichnet, dass** die erste Spule (3a) und die zweite Spule (3b) jedes der zumindest n Spulenpaare (3) oder aller Spulenpaare (3) hinsichtlich ihrer Eigenschaften wie Geometrie und/oder Wicklungsanzahl und/oder Wicklungsquerschnitt und/oder Herstellungsmaterial identisch zueinander aufgebaut sind.

7. Magnetisch-induktives Durchflussmessgerät (1) nach einem der vorherigen Ansprüche, **dadurch gekennzeichnet, dass** das magnetisch-induktive Durchflussmessgerät (1) zumindest n Spulenpaare (3) mit $n \geq 3$, vorzugsweise $n \geq 4$, weiter vorzugsweise $n \geq 6$, weiter vorzugsweise $n \geq 8$, weiter vorzugsweise $n \geq 10$ und weiter vorzugsweise $n \geq 12$ umfasst, und/oder dass das magnetisch-induktive Durchflussmessgerät (1) zumindest m Messelektroden (7) mit $m \geq 2$, vorzugweise $m \geq 3$, weiter vorzugsweise $m \geq 4$, weiter vorzugsweise $m \geq 6$, weiter vorzugsweise $m \geq 8$, weiter vorzugsweise $m \geq 10$ und weiter vorzugsweise $m \geq 12$ umfasst.

8. Magnetisch-induktives Durchflussmessgerät (1) nach Anspruch 7, **dadurch gekennzeichnet, dass** die ersten Spulen (3a) der zumindest n Spulenpaare (3) in einer ersten Spulenebene (8a), die senkrecht durch das Messrohr (2) verläuft, angeordnet sind und dass die zweiten Spulen (3b) der zumindest n Spulenpaare (3) in einer zweiten Spulenebene (8b), die senkrecht durch das Messrohr (2) verläuft, angeordnet sind und dass die zumindest m Messelektroden (7) in einer Messebene (9), die senkrecht durch das Messrohr (2) verläuft, angeordnet sind und dass die erste Spulenebene (8a), die zweite Spulenebene (8b) und die Messebene (9) in Axialrichtung (4) voneinander beabstandet parallel zueinander angeordnet sind.

9. Magnetisch-induktives Durchflussmessgerät (1) nach Anspruch 8, **dadurch gekennzeichnet, dass** die Messebene (9) zwischen der ersten Spulenebene (8a) und der zweiten Spulenebene (8b) angeordnet und gleich weit von beiden Spulenebenen (8a, 8b) beabstandet ist.

10. Magnetisch-induktives Durchflussmessgerät (1) nach einem der Ansprüche 7 bis 9, **dadurch gekennzeichnet, dass** die ersten und zweiten Spulen (3a, 3b) der zumindest n Spulenpaare (3) axialsymmetrisch zu der durch das Messrohr (2) verlaufenden Axialrichtung (4) an der Umfangswandung (5) des Messrohrs (2) angeordnet sind und/oder dass die zumindest m Messelektroden (7) axialsymmetrisch zu der durch das Messrohr (2) verlaufenden Axialrichtung (4) in jeweils einer Einführöffnung (6) des Messrohrs (2) an dessen Umfangswandung (5) angeordnet sind.

11. Magnetisch-induktives Durchflussmessgerät (1) nach Anspruch 10, **dadurch gekennzeichnet, dass** die ersten und die zweiten Spulen (3a, 3b) der zumindest n Spulenpaare (3) jeweils um $\alpha = 360°/n$ beabstandet zueinander an der Umfangswandung (5) des Messrohrs (2) angeordnet sind und/oder dass die zumindest m Messelektroden (7) jeweils um $\alpha = 360°/m$ beabstandet zueinander an der Umfangswandung (5) des Messrohrs (2) angeordnet sind.

12. Magnetisch-induktives Durchflussmessgerät (1) nach einem der Ansprüche 7 bis 11, **dadurch gekennzeichnet,**

**dass** das magnetisch-induktive Durchflussmessgerät (1) so viele Spulenpaare (3) wie Messelektroden (7) umfasst oder dass das magnetisch-induktive Durchflussmessgerät (1) weniger oder mehr Spulenpaare (3) als Messelektroden (7) umfasst.

13. Magnetisch-induktives Durchflussmessgerät (1) nach einem der Ansprüche 7 bis 12, **dadurch gekennzeichnet, dass** die erste und die zweite Spule (3a, 3b) jedes der zumindest n Spulenpaare (3) einen Spulenkern (21) aufweist und dass die Spulenkerne (21) aller ersten Spulen (3a) der zumindest n Spulenpaare (3) an ihrem ersten Ende (30) über ein erstes Joch (31a) miteinander verbunden sind und/oder dass die Spulenkerne (21) aller zweiten Spulen (3b) der zumindest n Spulenpaare (3) an ihrem ersten Ende (30) über ein zweites Joch (31b) miteinander verbunden sind.

14. Magnetisch-induktives Durchflussmessgerät (1) nach einem der vorherigen Ansprüche, **dadurch gekennzeichnet, dass** das magnetisch-induktive Durchflussmessgerät (1) eine Signalerzeugungseinrichtung (21), eine Messeinrichtung (11) und eine Steuereinheit (10) umfasst und dass jede der zumindest einen Messelektrode (11) zumindest mittelbar mit einem Eingang der Messeinrichtung (11) verbunden ist und dass jedes der zumindest n Spulenpaare (3) zumindest mittelbar mit einem Ausgang der Signalerzeugungseinrichtung (12) verbunden ist und dass die Steuereinheit (10) dazu ausgebildet ist, die Signalerzeugungseinrichtung (12) und die Messeinrichtung (11) derart anzusteuern, dass die Messeinrichtung (11) eine Messspannung von zumindest der einen Messelektrode (7) erfasst, die senkrecht oder mit einer Komponente senkrecht zum Magnetfeld angeordnet ist.

15. Magnetisch-induktives Durchflussmessgerät (1) nach Anspruch 14, **dadurch gekennzeichnet, dass** die Steuereinheit (10) dazu ausgebildet ist, die Signalerzeugungseinrichtung (12) derart anzusteuern, dass diejenigen ersten und zweiten Spulen (3a, 3b) zweier der zumindest n Spulenpaare (3), die in Umfangsrichtung um 180° versetzt um das Messrohr (2) herum angeordnet sind, ein Magnetfeld erzeugen, das in die gleiche Richtung gerichtet und vorzugsweise gleich groß ist.

16. Magnetisch-induktives Durchflussmessgerät (1) nach Anspruch 14 oder 15, **dadurch gekennzeichnet, dass** die Steuereinheit (10) dazu ausgebildet ist, die Signalerzeugungseinrichtung (12) derart anzusteuern, dass es sich bei dem Magnetfeld, welches das Messrohr (2) durchsetzt, um ein homogenes oder um ein inhomogenes Magnetfeld handelt.

17. Magnetisch-induktives Durchflussmessgerät (1) nach einem der Ansprüche 14 bis 16, **dadurch gekennzeichnet, dass** die Steuereinheit (10) dazu ausgebildet ist, die Signalerzeugungseinrichtung (12) derart anzusteuern, dass diese die ersten und zweiten Spulen (3a, 3b) der zumindest n Spulenpaare (3) mit einem getakteten Gleichfeld oder mit einem sinusförmigen Signal anregt.

18. Magnetisch-induktives Durchflussmessgerät (1) nach Anspruch 17, **dadurch gekennzeichnet, dass** die Steuereinheit (10) dazu ausgebildet ist, die Signalerzeugungseinrichtung (12) derart anzusteuern, dass diese die einzelnen Spulenpaare (3) durch das getaktete Gleichfeld zeitlich beabstandet (TDMA) oder codiert (CDMA) anregt, oder dass die Steuereinheit (10) dazu ausgebildet ist, die Signalerzeugungseinrichtung (12) derart anzusteuern, dass diese die n Spulenpaare (3) durch das sinusförmige Signal zeitlich beabstandet (TDMA) oder gleichzeitig unter Verwendung unterschiedlicher Frequenzen (FDMA) anregt.

19. Magnetisch-induktives Durchflussmessgerät (1) nach Anspruch 18, **dadurch gekennzeichnet, dass** die Messeinrichtung (11) einen I/Q-Demodulator umfasst, um die Messspannung von den Störsignalen zu trennen.

20. Verfahren zum Ermitteln einer axialen Durchflussgeschwindigkeitsverteilung für ein magnetisch-induktives Durchflussmessgerät, das nach einem der vorherigen Ansprüche aufgebaut ist, wobei das Verfahren nach dem DAR-Verfahren arbeitet, wobei in dem DAR-Verfahren eine Gewichtungsfunktion eingesetzt wird,
**dadurch gekennzeichnet,**
**dass** die Gewichtungsfunktion ein iteratives Verfahren beinhaltet.

21. Verfahren zum Ermitteln einer axialen Durchflussgeschwindigkeitsverteilung nach Anspruch 20, **dadurch gekennzeichnet, dass** die Gewichtungsfunktion eine Differenz zwischen einer rekonstruierten Durchflussgeschwindigkeitsverteilung und einer zugeführten Durchflussgeschwindigkeitsverteilung bildet.

22. Verfahren zum Ermitteln einer axialen Durchflussgeschwindigkeitsverteilung nach Anspruch 21, **dadurch gekennzeichnet, dass** die Gewichtungsfunktion gemäß nachfolgender Formel aufgebaut ist:

$$\rho_{n+1}(\boldsymbol{x}) = \rho_n(\boldsymbol{x}) + b\big(\hat{v}_z(\boldsymbol{x}) - v_z(\boldsymbol{x})\big) \quad,$$

wobei n die jeweilige Iteration angibt, b eine Feedback-Konstante ist, $\hat{v}_z(x)$ die rekonstruierte Durchflussgeschwindigkeitsverteilung darstellt und $v_z(\boldsymbol{x})$ die zugeführte Durchflussgeschwindigkeitsverteilung angibt.

23. Computerprogramm mit Programmcode-Mitteln, um das Verfahren gemäß einem der der Ansprüche 20 bis 22 durchzuführen, wenn das Programm auf einem Computer oder einem digitalen Signalprozessor ausgeführt wird.

24. Computerprogramm-Produkt mit insbesondere auf einem maschinenlesbaren Träger gespeicherten Programmcode-Mitteln, um alle Schritte gemäß einem der Ansprüche 20 bis 22 durchzuführen, wenn das Programm auf einem Computer oder einem digitalen Signalprozessor ausgeführt wird.

**Claims**

1. Magnetic-inductive flowmeter (1) with a measuring tube (2) and at least one measuring electrode (7),
   wherein the measuring tube (2) comprises an inflow section (2a) and an outflow section (2b), which are spaced to one another in an axial direction (4) of the measuring tube (2),
   wherein the measuring tube (2) has at least one opening (6) on its circumferential wall (5),
   wherein the at least one measuring electrode (7) is arranged in the at least one opening (6) with its electrode head (7a),
   wherein the magnetic-inductive flowmeter (1) comprises at least n coil pairs (3) with n ≥ 2
   wherein each of the at least n coil pairs (3) has a first and a second coil (3a, 3b),
   wherein the first and the second coil (3a, 3b) of the at least n coil pairs (3) are arranged offset to one another in the axial direction (4) of the measuring tube (2) on the circumferential wall (5) of the measuring tube (2),
   wherein the first and the second coil (3a, 3b) of the at least n coil pairs (3) are arranged at least partially overlapping one another in a top view of a cross section through the measuring tube (2),
   wherein the at least one measuring electrode (7) is arranged on a peripheral area of the circumferential wall (5) of the measuring tube (2), and
   wherein the peripheral area is located between the first and the second coil (3a, 3b) of each of the at least n coil pairs (3)
   **characterized in**
   **that** the first coil and the second coil (3a, 3b) of each of the at least n coil pairs (3) are connected electrically in series.

2. Magnetic-inductive flowmeter (1) according to claim 1, **characterized in that** the first and the second coil (3a, 3b) of each of the at least n coil pairs (3) are arranged offset to one another solely in the axial direction (4) and/or that the first and the second coil (3a, 3b) of the at least n coil pairs (3) are arranged completely overlapping and/or congruent to one another in the top view of a cross section through the measuring tube (2).

3. Magnetic-inductive flowmeter (1) according to claim 1 or 2, **characterized in that** the first and the second coil (3a, 3b) of each of the at least n coil pairs (3) are arranged radial to the axial direction (4) of the measuring tube (2) and perpendicular to a direction of flow at the circumferential wall (5) of the measuring tube (2) and/or that the at least one measuring electrode (7) is arranged radial to the axial direction (4) of the measuring tube (2) and perpendicular to the direction of flow at the circumferential wall (5) of the measuring tube (2).

4. Magnetic-inductive flowmeter (1) according to any one of the previous claims, **characterized in that** the at least one measuring electrode (7) is as far away from the first coil (3a) of each of the at least n coil pairs (3) as from the second coil (3b) of the respective coil pair (3).

5. Magnetic-inductive flowmeter (1) according to any one of the previous claims, **characterized in that** the at least one measuring electrode (7), in a top view of a cross section through the measuring tube (2) is arranged

   a) overlapping in respect to the first and second coil (3a, 3b) of each of the at least n coil pairs (3); or
   b) offset in the peripheral direction in respect to the first and second coil (3a, 3b) of the respective coil pair (3).

6. Magnetic-inductive flowmeter (1) according to any one of the previous claims, **characterized in that** the first coil (3a) and the second coil (3b) of each of the at least n coil pairs (3) or all coil pairs (3) are constructed identically to one another in view of their characteristics such as geometry and/or winding number and/or winding cross section and/or production material.

7. Magnetic-inductive flowmeter (1) according to any one of the previous claims, **characterized in that** the magnetic-inductive flowmeter (1) comprises at least n coil pairs (3) with n ≥ 3, preferably n ≥ 4, more preferably n ≥ 6, further more preferably n ≥ 8, further more preferably n ≥ 10 and further more preferably n ≥ 12, and/or that the magnetic-inductive flowmeter (1) comprises at least m measuring electrodes (7) with m ≥ 2, preferably m ≥ 3, more preferably m ≥ 4, further more preferably m ≥ 6, further more preferably m ≥ 8, further more preferably m ≥ 10, and further more preferably m ≥ 12.

8. Magnetic-inductive flowmeter (1) according to claim 7, **characterized in that** the first coils (3a) of the at least n coil pairs (3) are arranged in a first coil plane (8a) that runs perpendicular through the measuring tube (2) and that the second coils (3b) of the at least n coil pairs (3) are arranged in a second coil plane (8b) that runs perpendicular through the measuring tube (2) and that the at least m measuring electrodes (7) are arranged in a measuring plane (9) that runs perpendicular through the measuring tube (2), and that the first coil plane (8a), the second coil plane (8b) and the measuring plane (9) are spaced from one another in the axial direction (4) and parallel to one another.

9. Magnetic-inductive flowmeter (1) according to claim 8, **characterized in that** the measuring plane (9) is arranged between the first coil plane (8a) and the second coil plane (8b) and is spaced at a same distance from both coil planes (8a, 8b).

10. Magnetic-inductive flowmeter (1) according to any one of claims 7 to 9, **characterized in that** the first and the second coils (3a, 3b) of the at least n coil pairs (3) are arranged axisymmetric to the axial direction (4) running through the measuring tube (2) on the circumferential wall (5) of the measuring tube and/or that the at least m measuring electrodes (7) are arranged axisymmetric to the axial direction (4) running through the measuring tube (2) each in an opening (6) of the measuring tube (2) on its circumferential wall (5).

11. Magnetic-inductive flowmeter (1) according to claim 10, **characterized in that** the first and the second coils (3a, 3b) of the at least n coil pairs (3) are each arranged spaced to one another at α = 360°/n on the circumferential wall (5) of the measuring tube (2) and/or that the at least m measuring electrodes (7) are each arranged spaced to one another at α = 360°/m on the circumferential wall (5) of the measuring tube (2).

12. Magnetic-inductive flowmeter (1) according to any one of claims 7 to 11, **characterized in that** the magnetic-inductive flowmeter (1) comprises as many coil pairs (3) as measuring electrodes (7) or that the magnetic-inductive flowmeter (1) has less or more coil pairs (3) than measuring electrodes (7).

13. Magnetic-inductive flowmeter (1) according to any one of claims 7 to 12, **characterized in that** that the first and the second coil (3a, 3b) of each of the at least n coil pairs (3) has a coil core (21) and that the coil cores (21) of all first coils (3a) of the at least n coil pairs (3) are connected to one another on their first ends (30) via a first yoke (31a) and/or that the coil cores (21) of all second coils (3b) of the at least n coil pairs (3) are connected to one another on their first ends (30) via a second yoke (31b).

14. Magnetic-inductive flowmeter (1) according to any one of the previous claims, **characterized in that** the magnetic-inductive flowmeter (1) comprises a signal generator (21), a measuring unit (11) and a control unit (10) and that each of the at least one measuring electrodes (7) is at least indirectly connected to an input of the measuring unit (11) and that each of the at least one coil pairs (3) is at least indirectly connected to an output of the signal generator (12) and that the control unit (10) is designed for controlling the signal generator (12) and the measuring unit (11) so that the measuring unit (11) detects a measuring voltage of at least the one measuring electrode (7) that is arranged perpendicular or with one component perpendicular to the magnetic field.

15. Magnetic-inductive flowmeter (1) according to claim 14, **characterized in that** the control unit (10) is designed for controlling the signal generator (12) so that the respective first and second coils (3a, 3b) of two of the n coil pairs (3) that are arranged offset by 180° in the peripheral direction around the measuring tube (2) generate a magnetic field, which is directed in the same direction and preferably has the same size.

16. Magnetic-inductive flowmeter (1) according to claim 14 or 15, **characterized in that** the control unit (10) is designed for controlling the signal generator (12) so that the magnetic field that permeates the measuring tube (2) is a homogeneous or an inhomogeneous magnetic field.

17. Magnetic-inductive flowmeter (1) according to any one of claims 14 to 16, **characterized in that** the control unit (10) is designed for controlling the signal generator (12) so that it excites the first and the second coils (3a, 3b) of the at least n coil pairs (3) with a clocked constant field or with a sinusoidal signal.

18. Magnetic-inductive flowmeter (1) according to claim 17, **characterized in that** the control unit (10) is designed for controlling the signal generator (12) so that it excites the individual coil pairs (3) spaced temporally (TDMA) or coded (CDMA) using the clocked constant field, or that the control unit (10) is designed for controlling the signal generator (12) so that it excites the n coil pairs (3) spaced temporally (TDMA) using the sinusoidal signal or simultaneously using different frequencies (FDMA).

19. Magnetic-inductive flowmeter (1) according to claim 18, **characterized in that** the measuring unit (11) comprises an I/Q demodulator for separating the measuring voltage from the interference signals.

20. Method for determining an axial flow speed distribution for a magnetic-inductive flowmeter that is configured according to any one of the previous claims, wherein the method operates using the DAR method, wherein a weighting function is used in the DAR method
**characterized in**
**that** the weighting function contains an iterative method.

21. Method for determining an axial flow speed distribution according to claim 21, **characterized in that** the weighting function forms a difference between a reconstructed flow speed distribution and a supplied flow speed distribution.

22. Method for determining an axial flow speed distribution according to claim 21, **characterized in that** the weighting function is constructed according to the following formula:

$$\rho_{n+1}(\boldsymbol{x}) = \rho_n(\boldsymbol{x}) + b\left(\hat{v}_z(\boldsymbol{x}) - v_z(\boldsymbol{x})\right) \quad,$$

wherein n gives the respective iteration, b is a feedback constant, $\hat{v}_z(x)$ shows the reconstructed flow speed distribution and $v_z(x)$ gives the supplied flow speed distribution.

23. Computer program with program code resources for carrying out the method according to any one of claims 20 to 22, when the program is executed on a computer or a digital signal processor.

24. Computer program product with program code resources stored, in particular, on a machine-readable carrier for carrying out all steps according to any one of claims 20 to 22, when the program is executed on a computer or a digital signal processor.

**Revendications**

1. Débitmètre magnéto-inductif (1) comprenant un tube de mesure (2) et au moins une électrode de mesure (7),
le tube de mesure (2) comprenant une portion d'entrée (2a) et une portion de sortie (2b) qui sont espacées l'une de l'autre dans la direction axiale (4) du tube de mesure (2),
le tube de mesure (2) comportant au moins une ouverture d'insertion (6) au niveau de sa paroi circonférentielle (5) ,
l'au moins une électrode de mesure (7) étant disposée avec sa tête d'électrode (7a) dans l'au moins une ouverture d'insertion (6),
le débitmètre magnéto-inductif (1) comprenant au moins n paires de bobines (3), n ≥ 2,
chacune des au moins n paires de bobines (3) comportant une première bobine et une deuxième bobine (3a, 3b),
les première bobine et deuxième bobine (3a, 3b) de chacune des au moins n paires de bobines (3) étant disposées au niveau de la paroi circonférentielle (5) du tube de mesure (2) de manière décalées l'une par rapport à l'autre dans la direction axiale (4) du tube de mesure (2), les première bobine et deuxième bobine (3a, 3b) de chacune des au moins n paires de bobines (3) étant disposées de manière au moins partiellement chevauchante dans une vue en plan d'une coupe transversale du tube de mesure (2),
l'au moins une électrode de mesure (7) étant disposée sur une zone circonférentielle de la paroi circonférentielle (5) du tube de mesure (2) et la zone circonférentielle étant située entre les première bobine et deuxième bobine (3a, 3b) de chacune des au moins n paires de bobines (3),
**caractérisé en ce que**
les première bobine et deuxième bobine (3a, 3b) de chacune des au moins n paires de bobines (3) sont montées électriquement en série.

**2.** Débitmètre magnéto-inductif (1) selon la revendication 1, **caractérisé en ce que** les première bobine et deuxième bobine (3a, 3b) de chacune des au moins n paires de bobines (3) sont disposées de manière décalée l'une par rapport à l'autre uniquement dans la direction axiale (4) et/ou **en ce que** les première bobine et deuxième bobine (3a, 3b) de chacune des au moins n paires de bobines (3) se chevauchent complètement et/ou sont disposées de manière coïncidente l'une à l'autre dans une vue en plan d'une coupe transversale du tube de mesure (2).

**3.** Débitmètre magnéto-inductif (1) selon la revendication 1 ou 2, **caractérisé en ce que** les première bobine et deuxième bobine (3a, 3b) de chacune des au moins n paires de bobines (3) sont disposées radialement à la direction axiale (4) du tube de mesure (2) et perpendiculairement à une direction d'écoulement au niveau de la paroi périphérique (5) du tube de mesure (2) et/ou **en ce que** l'au moins une électrode de mesure (7) est disposée radialement à la direction axiale (4) du tube de mesure (2) et perpendiculairement à une direction d'écoulement au niveau de la paroi périphérique (5) du tube de mesure (2).

**4.** Débitmètre magnéto-inductif (1) selon l'une des revendications précédentes, **caractérisé en ce que** l'au moins une électrode de mesure (7) est équidistante de la première bobine (3a) de chacune des au moins n paires de bobines (3) et de la deuxième bobine (3b) de la paire de bobines respective (3).

**5.** Débitmètre magnéto-inductif (1) selon l'une des revendications précédentes, **caractérisé en ce que**, en vue de dessus d'une coupe transversale du tube de mesure (2), l'au moins une électrode de mesure (7) :

a) est disposée de manière chevauchante par rapport aux première bobine et deuxième bobine (3a, 3b) de chacune des au moins n paires de bobines (3) ; ou
b) est disposée de manière décalée dans la direction circonférentielle par rapport aux première bobine et deuxième bobine (3a, 3b) de la paire de bobines respective (3).

**6.** Débitmètre magnéto-inductif (1) selon l'une des revendications précédentes, **caractérisé en ce que** la première bobine (3a) et la deuxième bobine (3b) de chacune des au moins n paires de bobines (3) ou de toutes les paires de bobines (3) sont construites de manière identique les unes aux autres quant à leurs propriétés telles que la géométrie et/ou le nombre d'enroulements et/ou la section transversale des enroulements et/ou le matériau de fabrication.

**7.** Débitmètre magnéto-inductif (1) selon l'une des revendications précédentes, **caractérisé en ce que** le débitmètre magnéto-inductif (1) comporte au moins n paires de bobines (3), $n \geq 3$, de préférence $n \geq 4$, plus préférablement $n \geq 6$, plus préférablement $n \geq 8$, plus préférablement $n \geq 10$ et plus préférablement $n \geq 12$, et/ou **en ce que** le débitmètre magnéto-inductif (1) comporte au moins m électrodes de mesure (7) ; $m \geq 2$, de préférence $m \geq 3$, plus préférablement $m \geq 4$, plus préférablement $m \geq 6$, plus préférablement $m \geq 8$, plus préférablement $m \geq 10$ et plus préférablement $m \geq 12$.

**8.** Débitmètre magnéto-inductif (1) selon la revendication 7, **caractérisé en ce que** les premières bobines (3a) de l'au moins n paires de bobines (3) sont disposées dans un premier plan de bobine (8a) qui s'étend perpendiculairement à travers le tube de mesure (2) et **en ce que** les deuxièmes bobines (3b) des au moins n paires de bobines (3) sont disposées dans un deuxième plan de bobine (8b) qui s'étend perpendiculairement à travers le tube de mesure (2) et **en ce que** les au moins m électrodes de mesure (7) sont disposées dans un plan de mesure (9) qui s'étend verticalement à travers le tube de mesure (2), et **en ce que** le premier plan de bobine (8a), le deuxième plan de bobine (8b) et le plan de mesure (9) sont disposés parallèlement les uns aux autres et à distance les uns des autres dans la direction axiale (4).

**9.** Débitmètre magnéto-inductif (1) selon la revendication 8, **caractérisé en ce que** le plan de mesure (9) est disposé entre le premier plan de bobine (8a) et le deuxième plan de bobine (8b) et est équidistant des deux plans de bobine (8a, 8b).

**10.** Débitmètre magnéto-inductif (1) selon l'une des revendications 7 à 9, **caractérisé en ce que** les première bobine et deuxième bobines (3a, 3b) de l'au moins n paires de bobines (3) sont disposées de manière axialement symétrique par rapport à la direction axiale (4), s'étendant à travers le tube de mesure (2), au niveau de la paroi circonférentielle (5) du tube de mesure (2) et/ou **en ce que** les au moins m électrodes de mesure (7) sont disposées de manière axialement symétrique par rapport à la direction axiale (4), s'étendant à travers le tube de mesure (2), dans une ouverture d'insertion respective (6) du tube de mesure (2) au niveau de la paroi circonférentielle (5) de celui-ci.

**11.** Débitmètre magnéto-inductif (1) selon la revendication 10, **caractérisé en ce que** les première bobine et deuxième bobine (3a, 3b) des au moins n paires de bobines (3) sont chacune disposées au niveau de la paroi circonférentielle (5) du tube de mesure (2) en étant espacées l'une de l'autre de α = 360°/n et/ou **en ce que** les au moins m électrodes de mesure (7) sont chacune disposées au niveau de la paroi circonférentielle (5) du tube de mesure (2) en étant espacées les unes des autres de α = 360°/m.

**12.** Débitmètre magnéto-inductif (1) selon l'une des revendications 7 à 11, **caractérisé en ce que** le débitmètre magnéto-inductif (1) comporte autant de paires de bobines (3) que d'électrodes de mesure (7) ou **en ce que** le débitmètre magnéto-inductif (1) comprend moins ou plus de paires de bobines (3) que d'électrodes de mesure (7).

**13.** Débitmètre magnéto-inductif (1) selon l'une des revendications 7 à 12, **caractérisé en ce que** les première bobine et deuxième bobine (3a, 3b) de chacune des au moins n paires de bobines (3) comportent un noyau de bobine (21) et **en ce que** les noyaux de bobine (21) de toutes les premières bobines (3a) des au moins n paires de bobines (3) sont reliés entre eux à leur première extrémité (30) par le biais d'une première culasse (31a) et/ou **en ce que** les noyaux de bobine (21) de toutes les deuxièmes bobines (3b) des au moins n paires de bobines (3) sont reliés entre eux à leur première extrémité (30) par le biais d'une deuxième culasse (31b).

**14.** Débitmètre magnéto-inductif (1) selon l'une des revendications précédentes, **caractérisé en ce que** le débitmètre magnéto-inductif (1) comprend un dispositif de génération de signal (21), un dispositif de mesure (11) et une unité de commande (10) et **en ce que** chacune des au moins une électrode de mesure (11) est reliée au moins indirectement à une entrée du dispositif de mesure (11) et **en ce que** chacune des au moins n paires de bobines (3) est reliée au moins indirectement à une sortie du dispositif de génération de signal (12) et **en ce que** l'unité de commande (10) est conçue pour commander le dispositif de génération de signal (12) et le dispositif de mesure (11) de telle sorte que le dispositif de mesure (11) détecte une tension de mesure d'au moins une électrode de mesure (7) qui est disposée perpendiculairement au champ magnétique ou dont un composant est disposé perpendiculairement au champ magnétique.

**15.** Débitmètre magnéto-inductif (1) selon la revendication 14, **caractérisé en ce que** l'unité de commande (10) est conçue pour commander le dispositif de génération de signal (12) de telle sorte que les premières bobines et deuxièmes bobines (3a, 3b) de deux des au moins n paires de bobines (3), qui sont disposées autour du tube de mesure (2) en étant décalées de 180° dans la direction circonférentielle, génèrent un champ magnétique qui est dirigé dans la même direction et qui est de préférence de même grandeur.

**16.** Débitmètre magnéto-inductif (1) selon la revendication 14 ou 15, **caractérisé en ce que** l'unité de commande (10) est conçue pour commander le dispositif de génération de signal (12) de telle sorte que le champ magnétique, qui traverse le tube de mesure (2), est un champ magnétique homogène ou non-homogène.

**17.** Débitmètre magnéto-inductif (1) selon l'une des revendications 14 à 16, **caractérisé en ce que** l'unité de commande (10) est conçue pour commander le dispositif de génération de signal (12) de telle sorte que celui-ci excite les première bobine et deuxième bobine (3a, 3b) des au moins n paires de bobines (3) avec un champ continu pulsé ou avec un signal sinusoïdal.

**18.** Débitmètre magnéto-inductif (1) selon la revendication 17, **caractérisé en ce que** l'unité de commande (10) est conçue pour commander le dispositif de génération de signal (12) de telle sorte que celui-ci excite les paires de bobines individuelles (3) par le biais du champ continu pulsé de manière temporellement espacée (TDMA) ou codée (CDMA), ou **en ce que** l'unité de commande (10) est conçue pour commander le dispositif de génération de signal (12) de telle sorte que celui-ci excite les n paires de bobines (3) par le biais du signal sinusoïdal de manière temporellement espacée (TDMA) ou simultanément à l'aide de différentes fréquences (FDMA).

**19.** Débitmètre magnéto-inductif (1) selon la revendication 18, **caractérisé en ce que** le dispositif de mesure (11) comprend un démodulateur I/Q afin de séparer la tension de mesure des signaux parasites.

**20.** Procédé de détermination d'une distribution axiale de vitesse d'écoulement d'un débitmètre magnéto-inductif, qui est construit selon l'une des revendications précédentes, le procédé fonctionnant selon le procédé DAR, une fonction de pondération étant utilisée dans le procédé DAR,
**caractérisé en ce que**
la fonction de pondération comprend un processus itératif.

21. Procédé de détermination d'une distribution axiale de vitesse d'écoulement selon la revendication 20, **caractérisé en ce que** la fonction de pondération forme une différence entre une distribution de vitesse d'écoulement reconstruite et une distribution de vitesse d'écoulement fournie.

22. Procédé de détermination d'une distribution axiale de vitesse d'écoulement selon la revendication 21, **caractérisé en ce que** la fonction de pondération est construite selon la formule suivante :

$$\rho_{n+1}(x) = \rho_n(x) + b(\hat{v}_z(x) - v_z(x))$$

n indiquant l'itération respective, b étant une constante de rétroaction, $\hat{v}_z(x)$ représentant la distribution de vitesse d'écoulement reconstruite et $\hat{v}_z(x)$ indiquant la distribution de vitesse d'écoulement fournie.

23. Logiciel muni de moyens de code de programme pour mettre en œuvre le procédé selon l'une des revendications 20 à 22 lorsque le logiciel est exécuté sur un ordinateur ou un processeur de signal numérique.

24. Progiciel à code muni de moyens de code de programme mémorisés notamment sur un support lisible par machine, pour réaliser toutes les étapes selon l'une des revendications 20 à 22 lorsque le logiciel est exécuté sur un ordinateur ou un processeur de signal numérique.

Fig. 1A

Fig. 1B

Fig. 2

Fig. 3

Fig. 4

**Fig. 5**

Fig. 6

Fig. 7

Fig. 8A

Fig. 8B

Fig. 8C

Fig. 8D

Fig. 8E

Fig. 8F

Fig. 9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 2011056307 A1

- WO 9213256 A1

### In der Beschreibung aufgeführte Nicht-Patentliteratur

- **VON TAIICHI TESHIMA et al.** Electromagnetic Flowmeter with Multiple Poles and Electrodes. *Proceeding of Instrumentation and Measurement Technology Converence (IMTC/94,* 10. Mai 1994, vol. 3, 1221-1224

- **TRÄCHTLER, A ; WERNSDÖRFER A.** Direct Algebraic Reconstruction in Electromagnetic Flow Tomography. *Frontiers in Industrial Process Tomography,* 1995, 159-170